(19) Europäisches Patentamt

European Patent Office

Office européen des brevets

(11) Publication number: **0 314 908 B1**

(12) **EUROPEAN PATENT SPECIFICATION**

(45) Date of publication of patent specification: **02.12.92** (51) Int. Cl.5: **G10L 5/06**

(21) Application number: **88115174.0**

(22) Date of filing: **16.09.88**

(54) Automatic determination of labels and markov word models in a speech recognition system.

(30) Priority: **30.10.87 US 115505**

(43) Date of publication of application:
**10.05.89 Bulletin 89/19**

(45) Publication of the grant of the patent:
**02.12.92 Bulletin 92/49**

(84) Designated Contracting States:
**DE FR GB**

(56) References cited:
**EP-A- 0 238 691**
**EP-A- 0 238 697**
**EP-A- 0 243 009**

(73) Proprietor: **International Business Machines Corporation**
**Old Orchard Road**
**Armonk, N.Y. 10504(US)**

(72) Inventor: **Brown, Peter Fitzhugh**
**548 East 82nd Street Apt. 5B**
**New York, NY 10 028(US)**
Inventor: **De Souza, Peter Vincent**
**1301 Whitehill Road**
**Yorktown Height, NY 10 598(US)**
Inventor: **Nahamoo, David**
**12 Elmwood Road**
**White Plains, NY 10 605(UA)**
Inventor: **Picheny, Michael Alan**
**118 Ralph Avenue**
**White Plains, NY 10 606(US)**

(74) Representative: **Jost, Ottokarl, Dipl.-Ing.**
**IBM Deutschland GmbH Patentwesen und Urheberrecht Schönaicher Strasse 220**
**W-7030 Böblingen(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates in general to the recognition of speech probabilistically by representing words as respective sequences of Markov models in which labels --of a defined alphabet of labels-- represent Markov model outputs.

In language processing, it is common for a human phonetician to segment words into sequences of phonetic elements --the phonetic elements being selected from the International Phonetic Alphabet. Typically, the phonetician listens to a word and, based on his/her expertise, matches successive portions of the word with respective phonetic elements to determine a phonetic spelling of the word.

Such phonetic sequences have been provided in standard dictionaries. Also, however, phonetic sequences have been applied to speech recognition in general and to Markov model speech recognition in particular.

In the case of Markov model speech recognition, the various phonetic elements are represented by respective Markov models. Each word then corresponds to a sequence of phonetic Markov models.

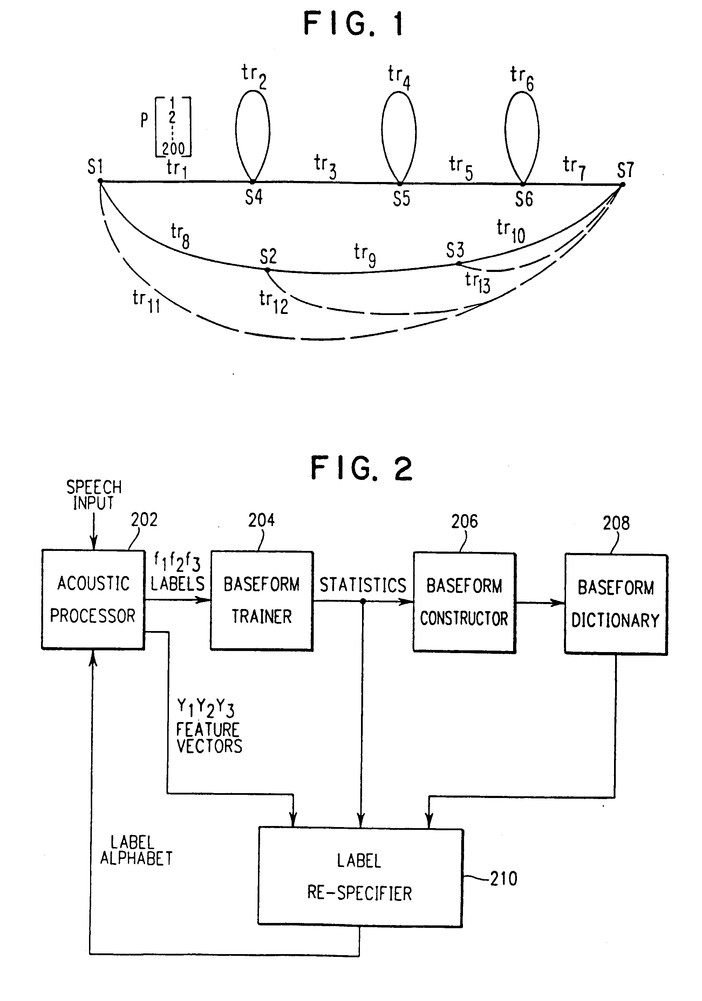

FIG.1 is a diagram depicting a sample Markov model which can represent a phonetic element. It is observed that the sample phonetic element Markov model includes seven states S1 through S7 and thirteen arcs (or transitions) which extend from a state to a state. Some arcs are simply loops extending from an arc back to itself while the other arcs extend from one arc to another. During a training session, a known word sequence is uttered and a probability for each arc in each Markov model is determined and stored.

Some arcs --referred to as "null arcs"-- are depicted with dashed lines. Non-null arcs are shown with solid lines. For each non-null arc, there are a plurality of label output probabilities associated therewith. A label output probability is the probability of a given label being produced at a given non-null arc in a given Markov model. These probabilities are also determined during the training session.

In the recognition process, the Markov models are employed in conjunction with an acoustic processor. The acoustic processor, in brief, receives a speech input and processes successive intervals of speech based on pre-defined parameters. Sample parameters have, in the past, included energy amplitudes at various frequency bands. Treating each parameter characteristic (e.g. the amplitude at each frequency) as a vector component, the collection of amplitudes represents a vector in speech space. The acoustic processor stores a plurality of predefined prototype vectors having prescribed vector component --or parameter-- values and assigns a label to each prototype vector. For each of successive intervals, a vector (referred to as a "feature vector") is generated by the acoustic processor 202 in response to an uttered input. Each component of a feature vector corresponds to the amplitude of a respective one of the parameters for a given interval. For each time interval, the label for the prototype vector which is "closest" to the feature vector is selected. For each interval, then, a label is generated by the acoustic processor.

The labels generated by the acoustic processor are the same labels which can be produced as label outputs along the arcs of the Markov models. After arc probabilities and label output probabilities are assigned during the training session, a procedure may be followed to determine the likelihood of a certain Markov model or sequence of Markov models --which corresponds to a "word baseform"-- given a particular string of labels generated by the acoustic processor. That is, given that labels $f_1 f_2 f_3 ...$ have been generated by the acoustic processor for successive intervals of speech, the likelihood of proceeding through each path of a Markov model (or sequence of models) and producing the string of generated labels can be determined. Performing this calculation for a word in a vocabulary provides a measure of that word's likelihood.

The accuracy of a Markov model speech recognizer is greatly dependent on (a) a proper selection of the parameter values for the labels in the alphabet of labels and (b) a proper selection of the Markov model structure and the statistics applied to the arcs. It has been found that reliance on human phoneticians to define the constituent parts of a word results in an arbitrariness in modelling, a lack of uniformity in the word baseforms (i.e., sequences of constituent parts which form a word), and accuracy levels which are not satisfactory.

In addition, the use of an alphabet of labels with fixed parameter values, which depends on some predefined clustering algorithm, has resulted in less than optimal recognition. This is the case of the prior art system disclosed in EP-A-0 238 697. Updating label parameter values is known from EP-A-0 312 209, but the adaptation is performed independently from the Markov model word baseforms.

In accordance with the present invention, the label parameter values and Markov model word baseforms are determined interdependently. That is, the parameter values of the labels in the alphabet are initially specified; Markov model word baseforms are defined; and the parameter values of the labels in the alphabet are re-specified based on data used in defining the word baseforms.

Rather than fixing the label parameter values, the present invention makes the label specification and word baseform definitions interdependent.

According to the present invention an apparatus for processing speech for speech recognition is as claimed in claim 1 and a corresponding computerized method as claimed in claim 5.

The present invention employs Markov models which, instead of corresponding to phonetic elements, correspond to the labels. For each label there is a label-related, or "fenemic", Markov model. Each such model has a plurality of arcs --with at least some non-null arcs at which labels may be produced. Due to speech variations, a jth Markov model in the set of models --which corresponds to the jth label in the label alphabet-- typically includes arcs at which labels other than the jth label may have a non-zero probability of being produced. Each word is represented as a sequence of fenemic Markov models.

When the word corresponding to a word baseform is uttered, the sequence of fenemic Markov models is aligned against the labels generated by an acoustic processor. For each fenemic Markov model in the sequence, the labels aligned thereagainst are identified. Moreover, the feature vectors which gave rise to the aligned labels are also identified. Using the mean and covariance values of all feature vectors aligned against a given fenemic Markov model, the prototype vector of the label associated with the given fenemic Markov model is re-specified. Repeating this for all fenemic Markov models results in a new alphabet of re-specified labels, i.e. labels with re-specified parameter values.

The re-specified label alphabet is then used to up-date the word baseform structures and probabilities.

In iterative fashion, the up-dated word baseform data may be used in again re-specifying the label parameters in the alphabet and the re-specified labels may be used in again up-dating the word baseform data, and so on for a desired number of iterations.

Making the label parameter values and word baseforms interdependent has resulted in increased speech recognizer performance and accuracy.

In the drawings,

FIG.1    is a diagram of a sample phonetic element Markov model;

FIG.2    is a block diagram illustrating apparatus for re-specifying labels and constructing Markov model word baseforms interdependently according to the present invention;

FIG.3    is a flow diagram illustrating the general steps performed in re-specifying labels and constructing Markov model word baseforms interdependently according to the present invention;

FIG.4    is a drawing depicting a label-related, or fenemic, Markov model;

FIG.5    is a block diagram illustrating a preferred embodiment of a label re-specifier shown in FIG.2;

FIG.6    is a flow diagram showing the steps performed in Viterbi alignment;

FIG.7    is a diagram showing the Viterbi alignment process of associating Markov models with generated labels;

FIG.8    is a flow diagram showing the steps in estimating the mean values and covariance values for each re-specified label;

FIG.9    is a flow diagram showing a preferred sequence of steps for initializing mean values and covariance values in FIG.8;

FIG.10    is a flow diagram showing a preferred sequence of steps involved in accumulating mean values and covariance values in FIG.8;

FIG.11    is a flow diagram showing a preferred sequence of steps involved in the final estimating of mean values and covariance values in FIG.8;

FIG.12    is a flow diagram showing the steps involved in labelling speech data;

FIG.13    is a flow diagram showing a preferred sequence of steps for determining the closest Markov model to a given feature vector;

FIG.14    is a diagram showing steps involved in constructing Markov model word baseforms based on multiple utterances of words;

FIG.15    is a diagram depicting a sequence of fenemic Markov models;

FIG.16    is a trellis diagram showing the states and arcs of the Markov model sequence of FIG.15 at various time intervals;

FIG.17    is a diagram illustrating the forward-backward algorithm as applied to a given arc in the trellis diagram of FIG.17; and

FIG.18    is a block diagram showing a speech recognition system in which labels and word baseforms formed interdependently are used in recognizing words from uttered speech inputs.

Referring to FIG.2, speech input is chosen entering an acoustic processor 202. The speech input is in the form of an acoustic waveform. Stored in the acoustic processor 202 are parameters of an alphabet of two hundred labels L1, L2, L3,...,L200. The label parameter values are stored in memory as indicated in TABLE 1 under the heading "Labels".

TABLE 1. MEMORY LAYOUT OF INVENTION

**Feature Vectors**

| Location | 1 | 2 | . | . | . | . | N |
|---|---|---|---|---|---|---|---|
| Value | $y^{11}_1(1)$ | $y^{11}_1(2)$ | | | | | $y^{11}_1(N)$ |

| Location | N + 1 | N + 2 | . | . | . | . | 2N |
|---|---|---|---|---|---|---|---|
| Value | $y^{11}_2(1)$ | $y^{11}_2(2)$ | . | . | . | . | $y^{11}_2(N)$ |

$$\vdots$$

| Location | $\ell^{11}N + 1$ | $\ell^{11}N + 2$ | . | . | . | $(\ell^{11} + 1)N$ |
|---|---|---|---|---|---|---|
| Value | $y^{12}_1(1)$ | $y^{12}_1(2)$ | . | . | . | $y^{12}_1(N)$ |

**Labels**

| Location | 1 | 2 | . | . | . | . | . | $\ell^{11}$ |
|---|---|---|---|---|---|---|---|---|
| Value | $f^{11}_1$ | $f^{11}_2$ | . | . | . | . | . | $f^{11}_{\ell^{11}}$ |

| Location | $\ell^{11} + 1$ | $\ell^{11} + 2$ | . | . | . | $\ell^{11} + \ell^{12}$ |
|---|---|---|---|---|---|---|
| Value | $f^{12}_1$ | $f^{12}_2$ | . | . | . | $f^{12}_{\ell^{12}}$ |

$$\vdots$$

**Viterbi Alignments**

| Location | 1 | 2 | . | . | . | . | . | $\ell^{11}$ |
|---|---|---|---|---|---|---|---|---|
| Value | $v^{11}_1$ | $v^{11}_2$ | . | . | . | . | . | $v^{11}_{111}$ |

| Location | $\ell^{11} + 1$ | $\ell^{11} + 2$ | . | . | . | $\ell^{11} + \ell^{12}$ |
|---|---|---|---|---|---|---|
| Value | $v^{12}_1$ | $v^{12}_2$ | . | . | . | $v^{12}_{\ell^{12}}$ |

$$\vdots$$

4

Baseforms

| Location | 1 | 2 | 3 | 4 | 5 | 6 | 7 | . . . | $3+2*NT_{11}-1$ | $3+2*NT_{11}$ |
|---|---|---|---|---|---|---|---|---|---|---|
| Value | $NNodes_1$ | $NID_{11}$ | $NT_{11}$ | $T_{111}$ | $S_{111}$ | $T_{112}$ | $S_{112}$ | $\cdot$ $\cdot$ | $T_{11NT_{11}}$ | $S_{11NT_{11}}$ |

| Location | $3+2*NT_{11}+1$ | $3+2*NT_{11}+2$ | $3+2*NT_{11}+3$ | . . | $5+2*(NT_{11}+NT_{12})-1$ |
|---|---|---|---|---|---|
| | $NID_{12}$ | $NT_{12}$ | $T_{121}$ | | $T_{11NT_{12}}$ |

Location $5+2*(NT_{11}+NT_{12})$ $\cdot$ $\cdot$ $\cdot$ $\cdot$

$S_{11NT_{12}}$

.
.
.

Statistics

| Location | 1 | 2 | 3 | . | . | . | . | NLABELS |
|---|---|---|---|---|---|---|---|---|
| Value | $P_{11}$ | $P_{12}$ | . | . | . | . | . | $P_{1NLABELS}$ |

| Location | NLABELS + 1 | NLABELS + 2 | . | . | 2NLABELS |
|---|---|---|---|---|---|
| Value | $P_{21}$ | $P_{22}$ | . | . | $P_{2NLABELS}$ |

.
.
.

| Location | (NARCS−1) NLABELS+1 | . | . | NARCS * NLABELS |
|---|---|---|---|---|
| Value | $P_{NARCS1}$ | . | . | $P_{NARCS1NLABELS}$ |

Means

| Location | 1 | 2 | 3 | . | . | . | N |
|---|---|---|---|---|---|---|---|
| Value | $M_1(1)$ | $M_1(2)$ | $M_1(3)$ | . | . | . | $M_1(N)$ |

| Location | N + 1 | N + 2 | . | . | . | 2N |
|---|---|---|---|---|---|---|
| Value | $M_2(1)$ | $M_2(2)$ | . | . | . | $M_2(N)$ |

$$\vdots$$

| Location | N(NP−1)+1 | N(NP−1)+2 | . | . | N*NP |
|---|---|---|---|---|---|
| Value | $M_{NP}(1)$ | $M_{NP}(2)$ | . | . | $M_{NP}(N)$ |

Variances

| Location | 1 | 2 | 3 | . | . | N | N+1 | N+2 | . | . | N*(N+1)/2 |
|---|---|---|---|---|---|---|---|---|---|---|---|
| Value | $C_1(1,1)$ | $C_1(1,2)$ | $C_1(1,3)$ | . | . | $C_1(1,N)$ | $C_1(2,2)$ | $C_1(2,3)$ | . | . | $C_1(N,N)$ |

| Location | N(N+1)/2+1 | . | . | . | . | . | 2 * N(N+1)/2 |
|---|---|---|---|---|---|---|---|
| Value | $C_2(1,1)$ | . | . | . | . | . | $C_2(N,N)$ |

$$\vdots$$

| Location | (NP−1) (N*(N+1)/2)+1 | . | . | . | NP(N*(N+1)/2) |
|---|---|---|---|---|---|
| Value | $C_{NP}(1,1)$ | . | . | . | $C_{NP}(N,N)$ |

Locations 1 through $\ell^{i1}$ contain label parameter values

$$f_1^{11} \text{ through } f_{\ell_{11}}^{11}$$

respectively, where $\ell^{in}$ represents the number of labels in the nth utterance of the ith word.

Viewing speech as a coordinate space, each label identifies a distinct cluster in the space. That is, each cluster of vectors in speech space is represented by a respective prototype vector and each prototype vector is identified with a respective label. For a speech input, the acoustic processor 202 puts out a string of labels where each successive label corresponds to a time interval of speech. Briefly, the acoustic processor 202 converts the speech input into successive feature vectors generated at successive time intervals and assigns a label to each successive feature vector.

For each given interval, a feature vector is determined based on parameter values and a determination is made as to which cluster the feature vector belongs. The label identifying the determined cluster is provided as output for the given interval.

A preferred form of the acoustic processor 202 is described in the European Patent Application 85 111 905.7 entitled "Nonlinear Signal Processing in Speech Recognition".In that preferred form, the parameters representing components of each feature vector are "neural firing rates", each neutral firing rate corresponding to a distinct frequency band. The neural firing rate for each band is determined based on a model of the human ear and a neural firing rate equation (for each frequency band) derived from the human ear model. Each neural firing rate (for a respective frequency band) is one component of each feature vector. By any of various known clustering techniques, the coordinate space which contains all of the possible feature vectors having neural firing rate components are partitioned into unique clusters. The clusters (each having a respective prototype vector) are identified respectively by labels L1, L2, L3,...,L200. For each successive interval of time (e.g., a centisecond), preferably twenty neural firing rates are determined; the feature vector having the determined firing rates as components is then compared to each of the two hundred clusters (or prototype vectors) to determine which is "closest" by some prescribed measure; and the label for said closest prototype vector is designated as the acoustic processor output for the given interval of speech.

In preparing the acoustic waveform for the process of assigning labels to successive speech intervals, the speech analog waveform is digitized, time intervals are generated, and the digital signal is passed through a Fast Fourier Transform, as described in the aforementioned co-pending patent application.

The outputs of the acoustic processor 202 include labels $f_1 f_2 f_3 ...$ and feature vectors $y_1 y_2 y_3 ...$ That is, for each interval of speech, there is a corresponding feature vector and a corresponding label.

The labels $f_1 f_2 ...$ enter a baseform trainer 204. The baseform trainer 204 is used in determining the probabilities which are to be applied to the Markov models in each word baseform, where each "word baseform" represents a prescribed sequence of Markov models. For each Markov model, storage in memory is provided (see TABLE 1) for containing arc probabilities and label probabilities. The probabilities are computed during a training session in which a known text is uttered.

For the known text, there is a corresponding known sequence of Markov models. When the known text is uttered by a speaker into an acoustic processor (e.g., processor 202), a string of labels is generated. By employing the well-known Forward-Backward algorithm described in greater detail below, probabilities for the arcs and for the labels produced at the non-null arcs of each Markov model are computed by the baseform trainer 204. The probability statistics computed by the baseform trainer 204 enter a baseform constructor 206. The baseform constructor 206 determines the sequence of Markov models for each word. The sequence of Markov models for each word and the arc probabilities and label output probabilities for each non-null arc in a Markov model are contained in a baseform dictionary 208. The storage structure of the baseform dictionary 208 is shown in TABLE 1 under the headings "Baseforms" and "Statistics".

In particular, the baseform dictionary 208 stores the following types of data items:

$NNODES_i$ = the number of nodes in the ith word baseform.

$NID_{ij}$ = the node identifier of the jth node in the ith word baseform.

$NT_{ij}$ = the number of arcs (transitions) from node $NID_{ij}$.

$T_{ijk}$ = the node identifier at which the kth arc from node $NID_{ij}$ terminates.

$S_{ij}$ = statistics pointer for arc (transition) $T_{ijk}$; points to 0 for a null arc and to a row in TABLE 1 for a non-null arc.

The significance of the data items stored in the "Baseform" and "Statistics" portions of TABLE 1 will be discussed in greater detail hereinbelow.

During training, baseform data (i.e., Markov model sequences and probability statistics therefor) and the feature vectors corresponding to successive speech intervals enter a label re-specifier 210. The label re-specifier 210 redefines the prototype vectors and clusters associated with the labels based on data generated during word baseform construction.

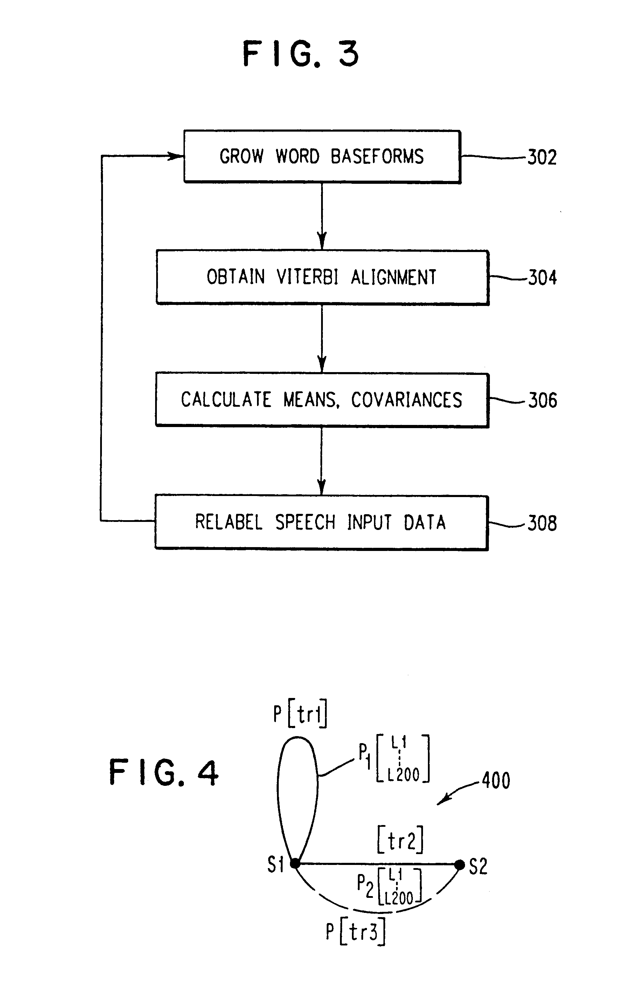

The operation of the apparatus of FIG.2 is reflected in FIG.3. FIG.3 shows four major steps of the invention. In step 302, word baseforms are "grown" or, more specifically, the sequence of Markov models and the statistics for the models are stored in computer memory (as described in greater detail hereinbelow). During the training session, words are uttered in a known order and labels are generated in response to the utterance. In a matching procedure step 304 (referred to as Viterbi alignment), successive substrings of labels generated in response to uttering the training text are associated with each Markov model in a word baseform. Accordingly, for the first Markov model in the first word uttered in the training text, there is an aligned substring of labels; for the second Markov model in the first word uttered in the training text, there is aligned a second substring of labels for the last Markov model in the first word, there is aligned a last substring of labels; and so on for the successive words in the training text.

Each label corresponds to a prototype vector and each label is selected by comparing a feature vector input for an interval of speech with each prototype vector --the label of the "closest" prototype vector being assigned to such interval.

In accordance with the invention, each Markov model in the set of models corresponds to a respective label in the label alphabet and preferably has a simpler structure than the phonetic element Markov model structure of FIG.1. A sample structure 400, referred to as a "fenemic Markov model", is shown in FIG.4. "Feneme" is an alternative expression for "label". In particular, the fenemic Markov model 400 has two states S1 and S2; a non-null loop arc extending from state S1 back to itself; a non-null arc extending from state S1 to state S2; and a null arc extending from state S1 to state S2. Each of the three arcs has a respective probability of being followed --namely p[tr1] , p[tr2], and p[tr3]--which are computed during the training session. At each non-null arc there are label output probabilities for the first arc, namely

$$
P_1 \begin{bmatrix} L1 \\ L2 \\ \cdot \\ \cdot \\ \cdot \\ L200 \end{bmatrix}
$$

and for the second arc,

$$P_2 \begin{bmatrix} L1 \\ \\ L2 \\ \cdot \\ \\ \cdot \\ \\ \cdot \\ \\ L200 \end{bmatrix}$$

In defining the Markov models as fenemic Markov models, it is observed that each word baseform is characterized as a sequence of models each of which corresponds to a label and not a phonetic element. That is, instead of the word "THE" being defined as a sequence of three phonetic element Markov models (see FIG.1) --one for each of the respective phonetic elements DH, UH1, and XX-- the word "THE" is defined as a sequence of perhaps sixty fenemic Markov models each structured as in FIG.3. For example, the word "THE" may be represented by the sequence of fenemic Markov models $F_{30}F_{30}F_{30}F_{32}...F_5$ where $F_t$ corresponds to the tth label in the alphabet. When the word "THE" is actually uttered, the labels generated and models corresponding to the utterance may not correlate one-to-one due to variations in speech over time, noise, and variations in speech due to context. Hence, although the word "THE" may, for example, be formed of the fenemic Markov models $F_{30}F_{30}F_{30}F_{32}F_{12}...F_5$, the actual labels generated need not be L30-L30-L30-L32-L12... Zero, one, or more labels may be produced in response to the uttering of a word segment corresponding to a given fenemic Markov model. This fact is reflected by the transition probabilities and label output probabilities stored for each fenemic Markov model during the training session. Oftentimes the probability of the label corresponding to a given fenemic Markov model (e.g., label L20 for fenemic Markov model $F_{20}$) is high and, for an utterance, the fenemic Markov model may produce only the label corresponding thereto. However, the non-zero label probabilities in each Markov model indicate that other labels may be produced also. In the above example, the first fenemic Markov model $F_{30}$ may produce simply the label L30 during an utterance or, depending on the utterance, may produce labels L28 followed by L30 followed by L28 or may produce other strings of labels.

The storing of word baseforms in memory is reflected in TABLE 1 under the heading "Baseforms" and "Statistics". Noting that the terms "node" and "state" are interchangeable and that the terms "arc" and "transition" are interchangeable, the entries in memory are now discussed. In location 1 of the "Baseforms" section of memory, the number of nodes in the first baseform --namely $NNODES_1$ is contained. In location 2 is stored an identifier for the first node in the first word baseform, i.e. $NID_{11}$. In location 3 is the value corresponding to the number of arcs extending from node $NID_{11}$. In location 4 is the identifier for the destination node of the first arc extending from node $NID_{11}$. At location 5 is a statistics identifier, $S_{111}$, which points to the data for arc $T_{111}$. Further data of these types are also stored.

In the "Statistics" portion of memory in TABLE 1, probability values are stored for each label being produced at each arc. In the first row, labels $P_{11}$ through $P_{1NLABELS}$ (NLABELS = number of labels in the alphabet) are provided to store the probability value of label L1 being produced at the first arc, label L2 being produced at the first arc, label L3 being produced at the first arc, and so on through the last label in the alphabet which is preferably L200 (where NLABELS = 200). The second row pertains to the label probabilities at the second arc. The last row pertains to the label probabilities applied to the last arc (where the number of arcs is symbolized by NARCS).

Referring to FIG.4, the significance of the stored data items in the "Baseforms" and "Statistics" sections is clarified. For a typical word, sixty to one hundred fenemic Markov models are concatenated. State S2 of one fenemic Markov model is State S1 of a next Fenemic Markov model. If the ith word includes seventy fenemic Markov models, $NNODES_i$ is stored in location 1 of the "Baseforms" section as 71. Each of the seventy-one nodes will have a corresponding ID number stored at location 2; location $(3 + 2 \times NT_{11} + 1)$; and the like. For fenemic Markov models as in Fig. 4, the number of arcs extending from each node is the same for each node (i.e., state). There is a self-loop arc and, between the subject node and the next node, there are (a) a null arc and (b) a non-null arc. Hence, $NT_{ij}$ in this embodiment will be three. For the self-loop arc, let $k = 1$. Then $T_{111}$ will contain the value identifying the first node. The other two arcs from the first node both extend to the second node; accordingly, $T_{112}$ and $T_{113}$ will identify the second node as the destination thereof. Moving from node to node in one word baseform to the next, the "Baseforms" section allocates storage for the data items pertaining to baseforms.

In general, then, the pointer $S_{ijk}$ points to the probabilities which apply to a given kth arc in an ith baseform. For the first arc, the first row in the "Statistics" section of memory applies. For the second arc, the second row applies; and so on through all arcs in the baseform.

The structuring of word baseforms of fenemic Markov models is described in two European Patent Applications 86 104 220.8, entitled "Feneme-Based Markov Models for Words" and 86 104 225.7, entitled "Constructing Markov Models of Words from Multiple Utterances".

Still referring to FIG.3, it is noted that the baseforms in step 302 are preferably sequences of fenemic Markov models and that the Viterbi alignment step 304 involves the associating of each fenemic Markov model with labels.

In step 304, the labels aligned and associated with a given fenemic Markov model are identified. Also identified are the feature vectors from which the labels (corresponding to the given fenemic Markov model) are derived. For each fenemic Markov model, there are zero, one or more feature vectors identified therefor. In step 306, the feature vectors identified for each fenemic Markov model are combined to compute mean values and covariance values. Referring again to the example sequence of fenemic Markov models for the word "THE", namely $F_{30}F_{30}F_{30}F_{32}F_{12}...$ suppose that the first occurrence of $F_{30}$ results in the alignment of label L30 therewith; the second occurrence thereof results in the alignment of labels L28, L30, and L28; and the third final occurrence thereof results in the alignment of no labels. In accordance with step 306, a mean is computed for the feature vectors which led to the generating of the label L30 (first occurrence of $F_{30}$); the label 28, the label 30, and the label 28 (second occurrence of $F_{30}$); and no feature vector. Covariances are also computed for the fenemic Markov model $F_{30}$. Similarly, for each fenemic Markov model, means and covariances are computed pursuant to step 306. Mean values and covariance values determined for a subject fenemic Markov model define the prototype vector (i.e. the parameter values) and cluster associated with the label corresponding to the subject fenemic Markov model.

The computed means and covariances for each fenemic Markov model is used in re-labelling incoming speech data pursuant to step 308. In particular, in selecting the label corresponding to a given interval of speech, the feature vector generated therefor is compared to the means and covariances specified for each label (pursuant to step 306). That is, the means and covariances for a fenemic Markov model corresponding tc label j are used to determine the distance between an input feature vector and the label j. Stated briefly, each jth label is re-specified based on the means and covariances of the fenemic Markov model corresponding to the jth label.

The new specification of labels is entered into the acoustic processor 202 of FIG.2. The acoustic processor 202 then labels speech based on the re-specified labels.

The sequence of fenemic Markov models and the respective statistics therefor are then up-dated as new word baseforms are grown in step 302 based on re-specified labels. Steps 302 through 308 may be repeated several times as desired. The dovetailing of label specification and baseform growing has resulted in improved speech recognition accuracy.

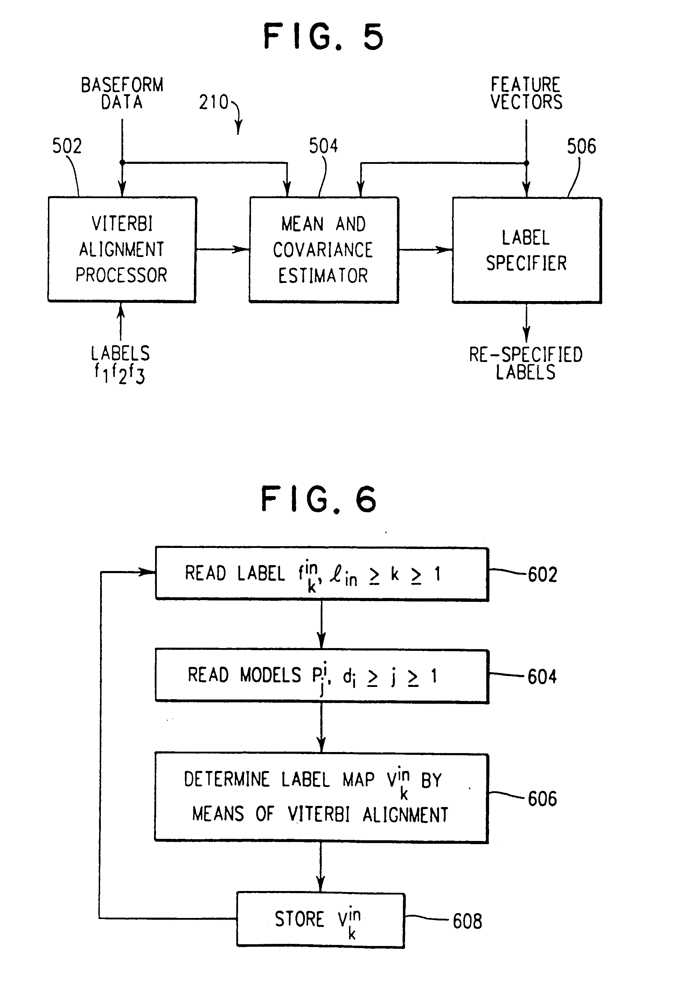

Referring now to FIG.5, a specific diagram of the label re-specifier 210 is shown. The re-specifier 210 includes a Viterbi alignment processor 502 which receives as input (a) the most recent constructed word baseforms, (b) statistics determined during training, and (c) the string of labels generated during the training session. As noted hereinabove, the purpose of the Viterbi alignment processor 502 is to match substrings of labels with Markov models in a word baseform.

The operation of the Viterbi alignment processor 502 is described with reference to FIG.6. In FIG.6, the following definitions apply.

$p_j^i$ = the jth fenemic Markov model of the ith word in a text of uttered words.

$d_i$ = the number of fenemic Markov models associated with the ith word in a text of uttered words.

$f_k^{in}$ = the kth label of the nth utterance of the ith word.

$\ell_{in}$ = the number of labels associated with the nth utterance of the ith word in a text of uttered words.

$v_k^{in}$ = the mapping of the kth label of the nth utterance of the ith word in a text of uttered words where $\ell_{in} \geq k \geq 1$, $d_i \geq v_k^{in} \geq 1$.

In FIG.6, it is assumed that at least some vocabulary words are uttered more than once. In step 602, the Viterbi alignment processor 502 reads in $f_k^{in}$ where $\ell_{in} \geq k \geq 1$. That is, a label in the string of labels generated by the acoustic processor 202 during training is identified. In step 604, the jth fenemic Markov model of one of the known words in the training text is identified. That is, $p_j^i$ (where $d_i > j > 1$) is read by the Viterbi alignment processor 502. In step 606, the kth label is mapped to a value $v_k^{in}$ which is stored in memory in step 608. For each utterance of each word, each kth label in the utterance has a $v_k^{in}$ value determined and stored therefor.

TABLE 1, under the heading of "Viterbi Alignments", shows the memory --associated with the re-labeller 210-- which contains $v_k^{in}$ values. $v_k^{in}$ values for labels corresponding to the first utterance of a first word are located in memory locations 1 through $\ell^{11}$ in the first row. Locations $\ell^{11} + 1$ through $\ell^{11} + \ell^{12}$ in the second row contain $v_k^{in}$ values for the second utterance of the first word. In the bottom row (not shown), the $v_k^{in}$ values for the labels corresponding to the last utterance of the last word are stored. It is observed that successive entries in a row correspond to successive labels generated in response to the uttering of the jth utterance of the ith word.

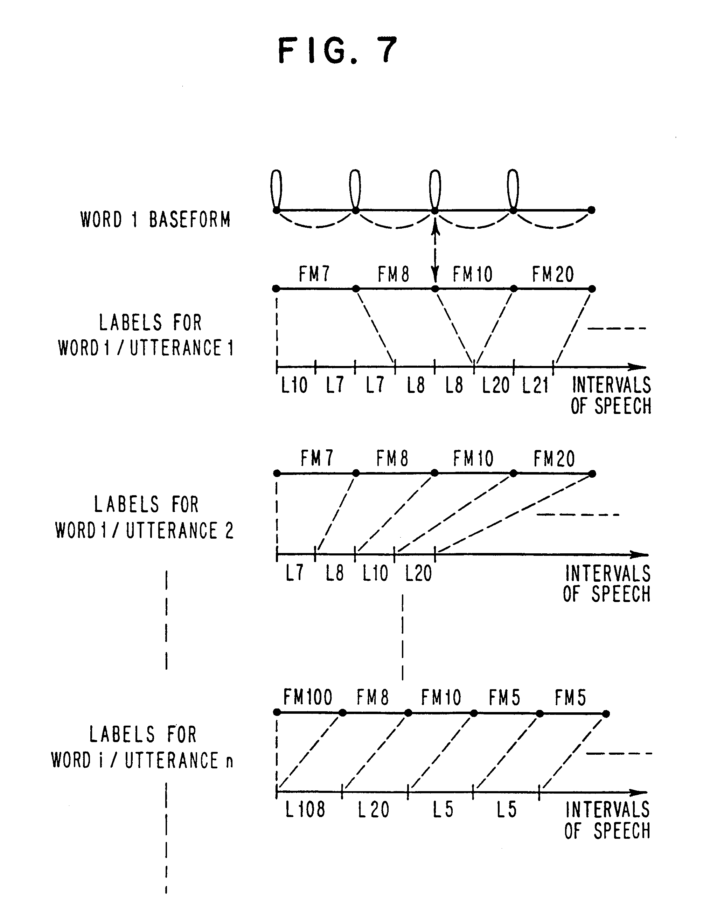

The $v_k^{in}$ values represent a correspondence between a kth label and a Markov model in the baseform for the word uttered. In FIG.7, a baseform for a first word is shown to include the sequence of fenemic Markov models :f. F sub $F_7 F_8 F_{10} F_{20}$. When the first word is uttered a first time, the acoustic processor 202 generates labels L10, L7, L7, L8, L8, L20, L21,... Looking first at label L10, the Viterbi alignment processor 502 maps label L10 to fenemic Markov model $F_7$ and stores the result in the memory location 1 of TABLE 2. The next two labels L7 and L7 are also aligned with the fenemic Markov model $F_7$. Accordingly, locations 2 and 3 in the first row under Viterbi Alignment storage in TABLE 1 store a map to $F_7$. The next two labels L8 and L8 are aligned with fenemic Markov model $F_8$ and the $v_k^{in}$ values stored therefor at locations 4 and 5 reflect this mapping. No labels are aligned with $F_{10}$. Labels L20 and L21 are aligned with fenemic Markov model $F_{20}$ and so on. As shown in FIG.7, the process is repeated for successive utterances of successive words.

The manner in which labels and Markov models are aligned is discussed in numerous articles, such as "Continuous Speech Recognition by Statistical Methods", volume 64, pp. 532-556 (1976) and "A Maximum Likelihood Approach to Continuous Speech Recognition", volume PAMI-5, Number 2, March 1983, by L.R. Bahl, F. Jelinek, and R.L. Mercer, which are incorporated herein by reference.

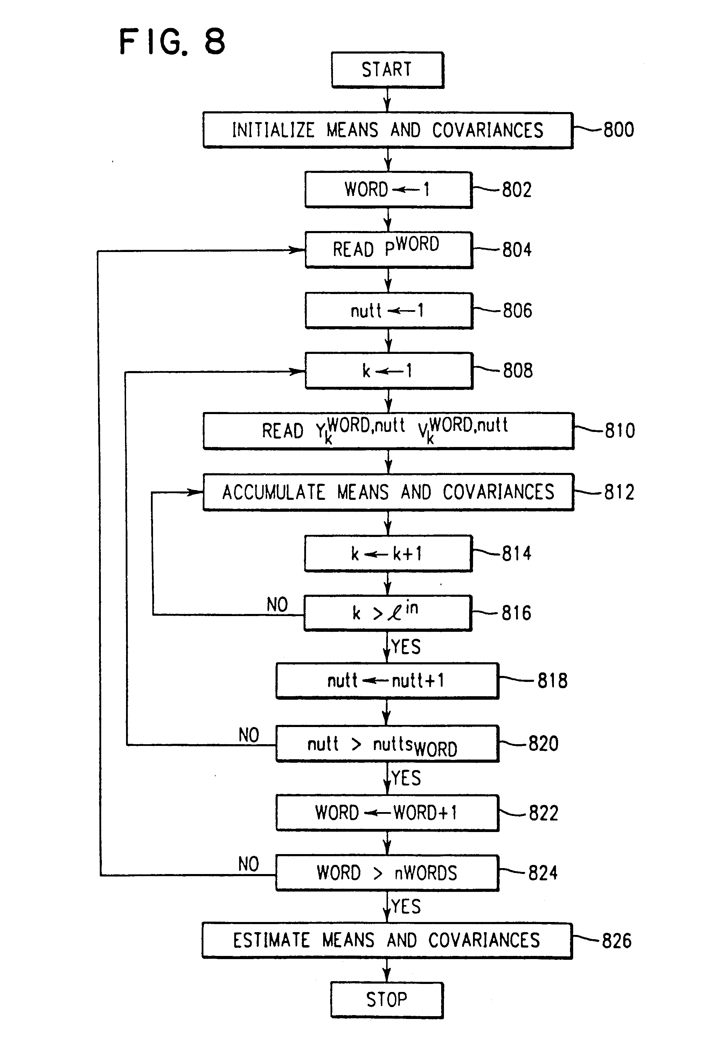

Referring again to FIG.5, the alignment results exit the Viterbi alignment processor 502 and enter a mean and covariance estimator 504. The mean and covariance estimator 504 also receives as input the successive feature vectors from which the acoustic processor 202 (of FIG.2) derives labels. The feature vectors generated for each utterance of a word are stored in memory as shown in TABLE 1 under heading "Feature Vectors." The baseform structures are also provided as input to the mean and covariance estimator 504. The mean and covariance estimator 504 operates as set forth in the flowchart of FIG.8. As discussed hereinabove, the estimator 504 operates to compute the mean of all feature vectors corresponding to labels generated for one fenemic Markov model after another. The covariances of the feature vectors associated with each fenemic Markov model is also computed.

In computing the means and covariances, the estimator 504 first initializes all means and covariances to zero in step 800. That is, the mean vector $M(i)$ and covariance matrix $C(i)$ and a count value COUNT $(i)$ are set to zero for each ith fenemic Markov model. The total number of Markov models is identified by the variable Nphones.

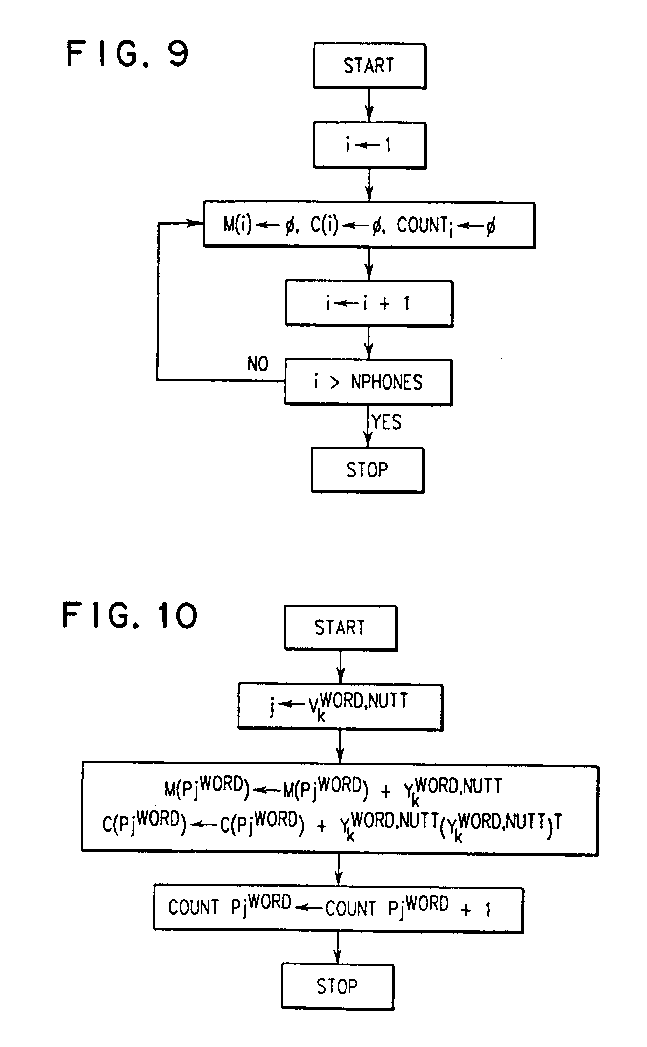

In step 802, the first word is selected. In step 804, the fenemic Markov models for the selected word are read as $p^{word}$. For the first utterance of the selected word, the first fenemic Markov model is selected by means of steps 806 and 808. At step 810, the feature vector for the kth label of a given jth utterance of an ith word and the $v_k^{in}$ value stored therefor are read. At step 812, means and covariances are accumulated as shown in FIG.10.

That is, j is set to the value of $v_k^{in}$ and a mean value $M(p_j^{w\ ord})$ is up-dated by adding the feature vector $y_k^{in}$ to a previous value of the jth Markov model of the selected word, $M(p_j^{w\ ord})$. The covariance matrix $C(p_j^{w\ ord})$ is similarly up-dated by adding $y_k^{in} \times (y_k^{in})^T$ to the previous set of covariances. A count COUNT $(p_j^{w\ ord})$ is incremented from a previous value thereof by adding 1 thereto. It is recalled that each mean, covariance, and COUNT value is initially zeroed (in step 800).

The accumulation of mean and covariance values for each kth label is performed pursuant to the loop prompted by steps 814 and 816. Accumulated mean and covariance and COUNT values are computed for successive labels until k exceeds the number of feature vectors aligned against the given word (i.e., the first word in the first iteration) and utterance thereof. The process of accumulating means, covariances, and COUNTs involves iterating the steps 810 through 820 for successive utterances until all utterances of the first word are examined and processed. After all utterances for a given word are processed, the next word is selected at step 822 provided that all words have not been processed previously. For the next selected word, steps 804 through 822 are repeated. After all utterances of all nwords have been processed (Step 824), means and covariances $M(i)$ and $C(i)$ are estimated in step 826.

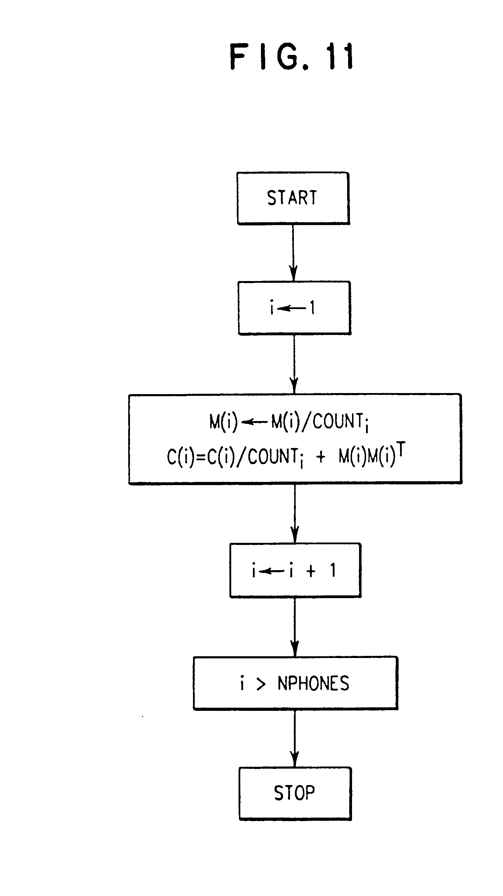

Step 826 is depicted in detail in FIG.11. For each ith fenemic Markov model, the mean $M(i)$ is computed as $M(i)/COUNT(i)$ and the covariances are computed as $C(i) = [C(i)/COUNT(i)] + M(i)M(i)^T$. $M(i)^T$ is the transpose of $M(i)$.

Referring again to TABLE 1, the storage of means and covariances in the memory of the re-labeller 210 is shown. A first row of memory has locations 1 through N and contains mean values $M_1(1)$ through $M_1(N)$ where N is the number of feature vectors for a given label and $M_i$ is the mean value for the ith label. A second row in the memory includes locations (N + 1) through 2N, which contain mean values $M_2(1)$ through $M_2(N)$ respectively. The last row of memory for the mean values include locations [ N x ($n_{phones}$ - 1) + 1] which contain mean values $M_{nphones}(1)$ through $M_{nphones}(N)$ where $n_{phones}$ is the number of Markov models.

Also shown in TABLE 1 is storage of the covariances. In the first row thereof are locations 1 through [N x (N + 1)/2] which contain covariances $C_1(1, 1)$ through $C_1(n,N)$.
The last row includes locations
[$(n_{phones}$ - 1) x N x (N + 1)/2] + 1 through
$n_{phones}(N \times (N + 1)/2)$ which contain covariance values
$C_{nphones}(1, 1)$ through $C_{nphones}(N, N)$.

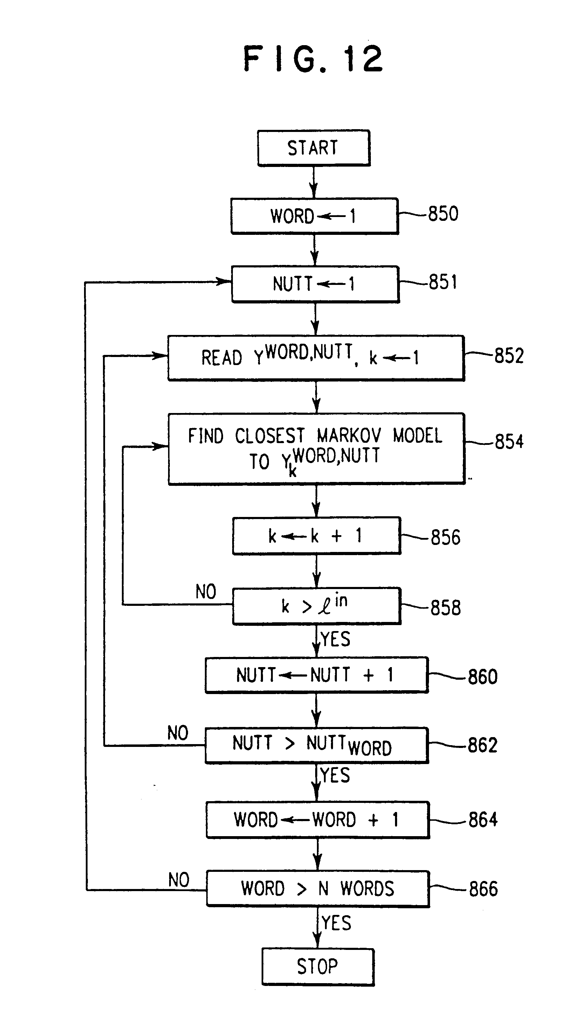

The means and covariances computed by the estimator 504 enter the label specifier 506 together with the parameter vectors generated by the acoustic processor 202 (of FIG.2). The label specifier 506 up-dates the definitions of the labels in the label alphabet according to the flowchart of FIG.12.

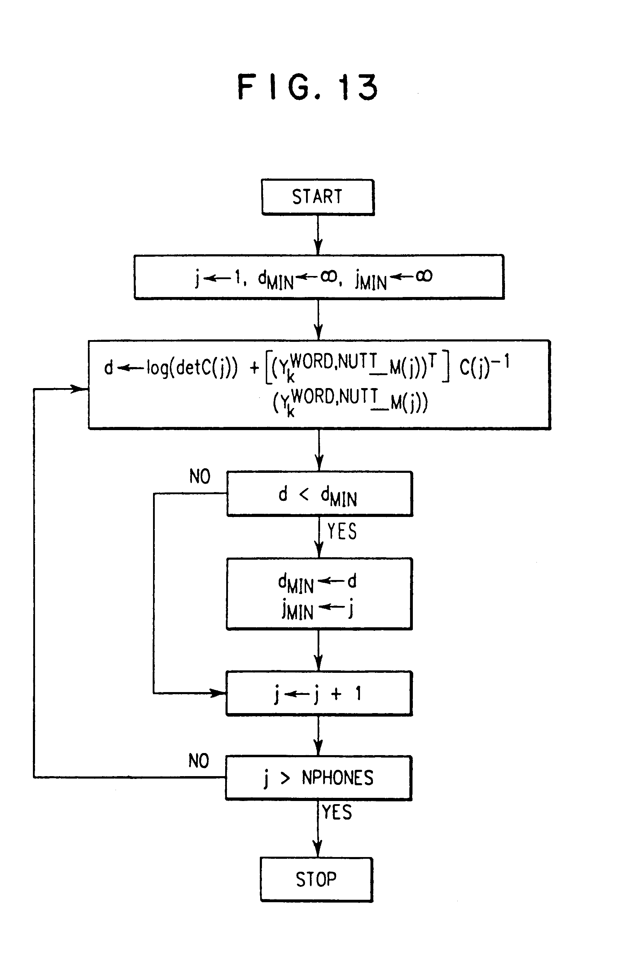

In FIG.12, a feature vector $y_k^{w\ ord,nutt}$ is read. In the first iteration, the first feature vector in the string of labels generated for the first utterance of the first word --namely, $y_1^{1\ ,1}$ -- is read (see steps 850, 851, 852, and 854). The closest Markov model to the feature vector is determined in step 854. Step 854 is expanded in FIG.13.

Referring to FIG.13, a distance measurement is made between the currently read feature vector and the mean and covariance values stored for each Markov model. Where $M(j)$ corresponds to the mean value of the jth fenemic Markov model and $C(j)$ corresponds to the covariance of the jth fenemic Markov model, the distance measurement is defined as:

$$d \leftarrow \log(\det\ C(j)) + \left[(y_k^{word,nutt} - M(j))\right]^T C(j)^{-1} (y_k^{word,nutt} - M(j))$$

The distance measurement is performed for one fenemic Markov model after another with the j resulting in the minimum d value being stored as $j_{min}$, the closest fenemic Markov model for the kth feature vector.

Referring again to FIG.12, one kth feature vector after another is processed until the closest fenemic Markov model for each feature vector in an utterance of a word have been determined (see steps 854, 856, and 858). Successive utterances of the current word are processed according to steps 852 through 862 until all utterances of the current word have been processed. Accordingly, all feature vectors for one utterance of the current word after another are processed to determine the respective closest fenemic Markov models therefor. Thereafter a next word is selected, with steps 850 through 866 being performed for each word until all nwords have been processed.

In reviewing FIG.12, it is observed that for each fenemic Markov model there are mean and covariance values stored therefor. These values for a given fenemic Markov model define the prototype vector and cluster of the label that correlates to the given fenemic Markov model. Hence, for a generated feature vector, a distance measurement is made using the mean M(j) and covariance C(j) of each jth Markov model and the $j_{min}$th label (which correlates to the $j_{min}$th fenemic Markov model).

Given the re-specified labels and fenemic Markov models correlated thereto, new word baseforms are constructed based on the up-dated data. The constructing of fenemic word baseforms is described in detail in US Patent 4,718,094, entitled "Speech Recognition System", and in the European Patent Application 87 102 423.8, entitled "Improving the Training of Markov Models Used in a Speech Recognition System". A discussion of baseform growing is also included hereinbelow, briefly outlining the method of applying the Forward-Backward algorithm in constructing Markov model sequences for words. The memory of TABLE 1, under the headings of "Baseforms" and "Statistics", are up-dated as new baseforms and probability statistics therefor are computed.

A simple method of forming fenemic Markov model baseforms involves uttering each word once at a known time. The string of labels generated by the acoustic processor 202 (of FIG.2) for a known word at a known time is noted. The fenemic models for the generated labels are concatenated to form a fenemic Markov model word baseform. For a known word XXX, for example, suppose that the labels L1-L5-L5-L6-... are generated. Based on the single utterance method, the fenemic Markov model baseform for the word XXX is $F_1 F_5 F_5 F_6 ....$

An alternative, preferred feneme-based Markov model word baseform is constructed based on multiple utterances of a word. In this approach, the word baseforms account for variations in pronunciation of a given word. One method for achieving this end is set forth in the European Patent Application 86 104 225.7.

In the application noted immediately hereinabove, the steps listed below are followed in constructing the fenemic baseform for each word segment (e.g. each word or predefined syllable or part thereof) in a vocabulary. Specifically, a method is provided which includes the steps of: (a) transforming each of multiple utterances of the word segment into a respective string of labels; (b) defining a set of fenemic Markov models; (c) determining the best single model P1 for producing the multiple label strings; (d) determining the best two model baseform of the form P1P2 or P2P1 for producing the multiple label strings; (e) aligning the best two-model baseform against each label string; (f) splitting each label string into a left portion and a right portion with the left portion corresponding to the first model of the two-model baseform and the right portion corresponding to the second model of the two-model baseform; (g) identifying each left portion as a left substring and each right portion as a right substring; (h) processing the set of left substrings in the same manner as the set of label strings corresponding to the multiple utterances including the further step of inhibiting further splitting of a substring when the single model baseform thereof has a higher probability of producing the substring than does the best two-model baseform; (j) processing the set of right substrings in the same manner as the set of label strings corresponding to the multiple utterances, including the further step of inhibiting further splitting of a substring when the single model baseform thereof has a higher probability of producing the substring than does the best two-model baseform; and (k) concatenating the unsplit single models in an order corresponding to the order of the label substrings to which they correspond. In a particular embodiment, the method includes the further steps of: (ℓ) aligning the concatenated baseform against each of the label strings and identifying, for each model in the concatenated baseform, the substring in each label string which corresponds thereto, the substrings corresponding to a given model being a set of common substrings; (m) for each set of common substrings, determining the model having the highest joint probability of producing the common substrings; and (n) for each common substring, replacing the model therefor in the concatenated baseform by the determined model of highest joint probability; the baseform resulting from the replacing of models being a refined baseform. If the steps ($\ell$) through (n) are repeated until no models are replaced, a further refined baseform is achieved.

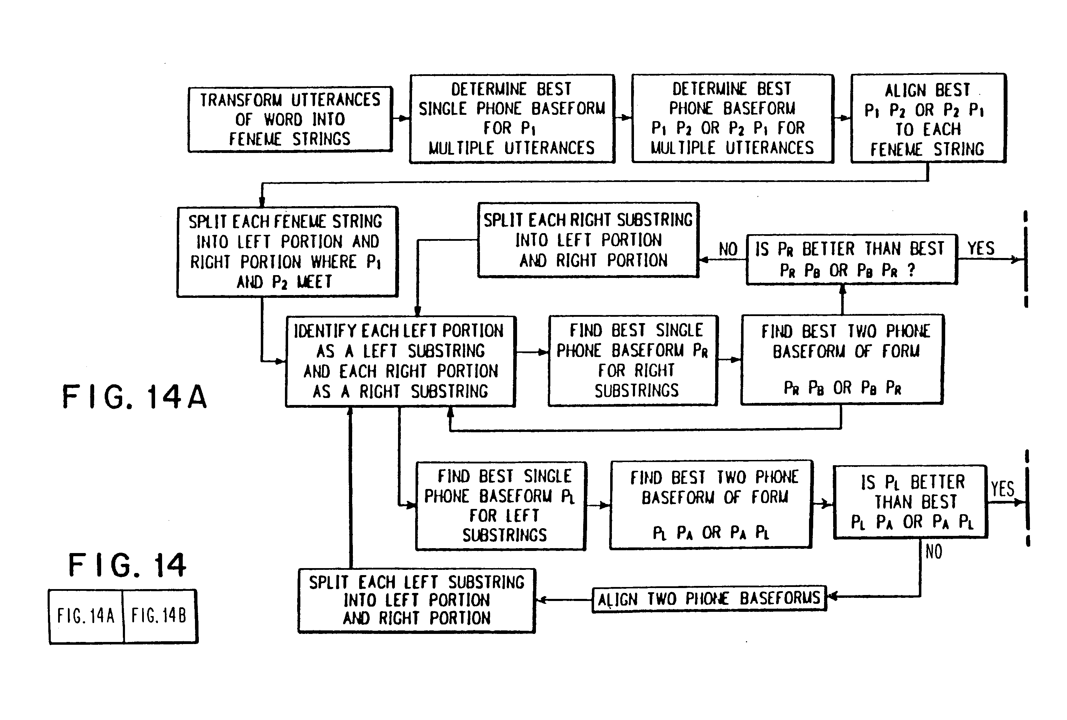

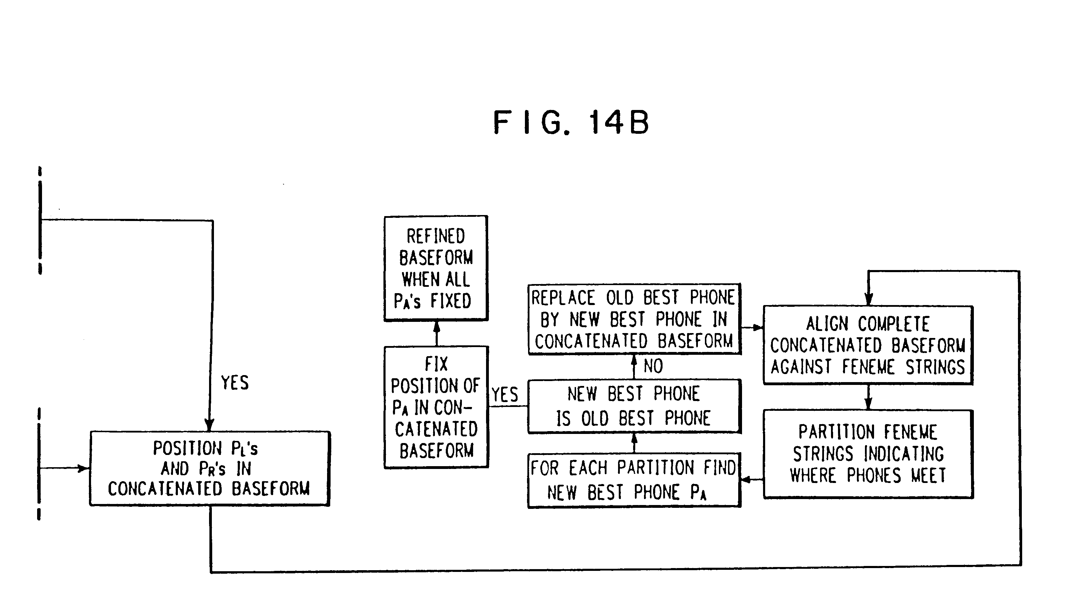

The flowchart of FIG.14 illustrates a preferred methodology for constructing fenemic word baseforms from multiple utterances. In the flowchart, the term "phone" corresponds to Markov model. Hence, a single phone baseform is a baseform constructed of a single Markov model. Also, P1 and P2 correspond to two phones --that is, two Markov models. Basically, a divide-and-conquer strategy is employed.

Transition probabilities and label output probabilities (i.e., probability items) stored in TABLE 1 are defined in terms of "counts". A "count" typically defines the (expected) number of times a particular event occurs. In the present context, there are "single counts" and "cumulative counts." Unless otherwise specified, the term "count" when used alone means "single count".

The probability items are computed based on data accumulated during a training session in which known words --each represented as a known sequence of fenemic Markov models --are uttered and a string of labels are generated.

That is, given estimated values $\Theta'$ for the probability items and the string of labels generated during the training session, a "single count" is computed as the probability of a particular transition $\gamma_i$ and state $S_j$ given (a) a certain string Y of labels, (b) defined estimated values $\theta'$, and (c) a particular time t. Each above-described single count is determined by applying the well-known forward-backward algorithm.

According to the above definition, the single count may be represented by the expression:

$$Pr(S_j, \gamma_i | Y, \Theta', t)$$

In computing the single counts set forth above, the $\Theta'$ may be omitted as implicit in a probability characterized as $Pr'$. Applying Bayes Theorem, the expression becomes:

$$Pr'(\gamma_i, S_j, Y | t) / Pr'(Y)$$

$Pr'(Y)$ is the probability derived from the forward pass probability computed using the parameters $\theta'$ in the well-known Forward-backward algorithm. The problem is thus reduced to computing the probabilities:

$$Pr'(\gamma_i, S_j, Y | t) / Pr'(Y) \text{ for all } i,t$$

which --for each i,t-- represents the probability that a given Markov model produces the label string Y and that transition $\gamma_i$ of the Markov model is taken at time t.

By summing the single counts for a specific $S_j$, $\gamma_i$, Y, and $\Theta'$ for each time t, a transition "cumulative count" is determined for a corresponding transition probability item. Because the transition cumulative count is a sum of probabilities, its value may exceed unity. For each transition probability item, a respective cumulative count is stored. By dividing this cumulative count for a given transition by the sum of cumulative count for all transitions which can be taken from the same initial state as that for $\gamma_i$, a current probability value for the respective transition probability item is computed. The current probability value is preferably stored and associated with its respective transition probability item.

Each transition probability item, it is noted, is preferably defined in estimated form as:

$$Pr(\tau_i | S_j) = \frac{\sum_{t=1}^{T+1} Pr'(S_j, \tau_i | Y, t)}{\sum_{k=1}^{K} \sum_{t=1}^{T+1} Pr'(S_j, \tau_k | Y, t)}$$

From the above equation, it is evident that each transition probability is defined in terms of counts. The numerator is a cumulative count --the sum of single count values for a given transition $\gamma_i$ at any time through time T + 1-- while the denominator represents the sum of single count values taken over all possible transitions $\gamma_i$ through $\gamma_k$, which have the same initial state as $\gamma_i$ taken over all times through time T + 1.

Furthermore, it is noted that each label output probability at any non-null transition is preferably also defined in terms of counts. That is, an estimated label output probability $Pr'$ for a label $f_h$ being produced given a transition $\gamma_i$ and state $S_j$ is mathematically represented as:

$$Pr(f_h | \tau_i, S_j) = \frac{\sum\limits_{t:y_t-f_h} Pr'(S_j, \tau_i | Y, t)}{\sum\limits_{t=1}^{T} Pr'(S_j, \tau_i | Y, t)}$$

where $f_h$ corresponds to a specific label selected from the alphabet of labels and $y_t$ corresponds to the label generated at a time interval t.

Each summed term in the numerator represents the probability that a label $y_t$ generated in the string Y is label $f_h$ and the label $y_t$ was produced on transition $\gamma_i$ out of state $S_j$, given that the generated label output was the string Y.

The sum in the numerator is a label "output cumulative count" and is preferably stored with the associated label output probability item corresponding therewith. By dividing this cumulative count by the sum of single counts over all label times for tile specific $S_j$, $\gamma_i$, Y, and $\Theta'$, a current probability value is determined for the respective label output probability item.

The transition probabilities and label output probabilities are accordingly readily computed from the counts after an iteration of count adjustment.

In determining the values for the counts, the well-known forward-backward algorithm is used. For all values of i, j, and t, that is, the value of $Pr'(S_j, \gamma_i | Y, t)$ is determined and stored as a value for a respective count.

A detailed description of the forward-backward algorithm is set forth in Appendix III of the above-cited article entitled "Continuous Speech Recognition by Statistical Methods".

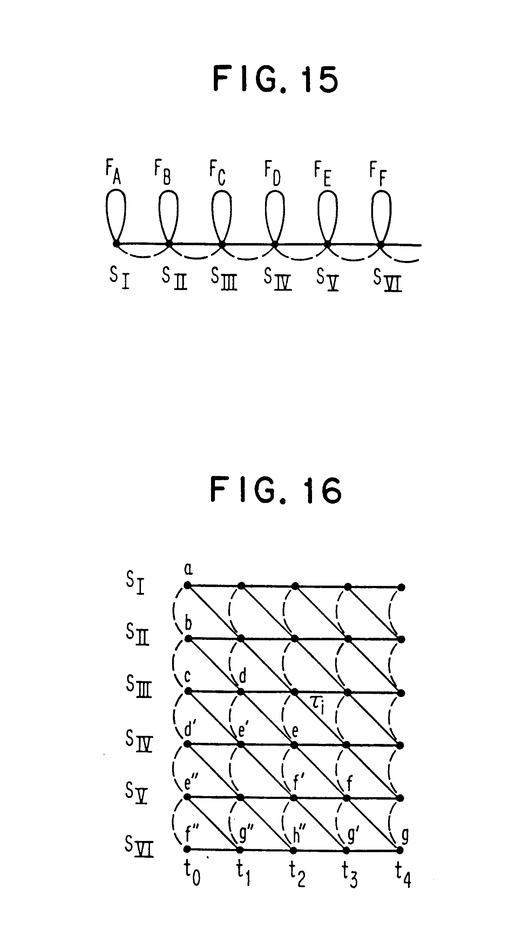

The basic concept of the forward-backward algorithm is now discussed with reference to FIG.15, FIG.16, and FIG.17. In FIG.15, six fenemic Markov models $F_A$, $F_B$, $F_C$, $F_D$, $F_E$, and $F_F$ are shown in a sample word baseform. Although word baseforms typically extend over sixty to one hundred fenemic Markov models, for purposes of explanation it is assumed that the sample word baseform starts at state $S_I$ and ends at state $S_{VI}$. For purposes of this example, it is assumed that four labels $f_a$, $f_b$, $f_c$, and $f_d$ are generated between states $S_I$ and $S_{VI}$, the final state of the word baseform, when an utterance of the sample word is processed by the acoustic processor 202.

From a known method or a measured interval of silence, it is assumed that the end of the sample word is known to be time interval $t_4$. Each time interval, it is noted, represents a time during which a label is produced. Preferably, each interval is one centisecond.

It is observed that there are a plurality of paths which may be followed in producing four labels between states $S_I$ through $S_{VI}$ ending at time $t_4$.

The trellis of FIG.16 illustrates the optional paths which may be followed. That is, point "a" in the trellis represents the first state of the first Markov model in the baseform -- $F_A$-- at time $t_0$. Proceeding vertically downward from point "a" to point "b" indicates that the null arc of model $F_A$ is taken to state $S_{II}$. Proceeding horizontally to the right of point "a" suggests that the non-null loop of model $F_A$ is followed and the first label is produced. Proceeding diagonally downward to the right of point "a" indicates that the non-null arc extending from state $S_I$ to state $S_{II}$ is followed and the first label is produced thereat. A similar analysis applies at the various time intervals for the successive states shown in the trellis.

In generating four labels, extending between states $S_I$ through $S_{VI}$ ending at time interval $t_4$ one path would proceed along the points a-b-c-d-e-f-g. The four labels would be produced at the arcs c-d, d-e, e-f, and f-g. A second path would proceed along the following points a-b-c-d'-e'-f'-g'-g. The four labels would be produced at arcs d'-e', e'-f', f'-g', and g'-g. Still a third path would follow the points a-b-c-d'-e''-f''-g''-h''-g'-g. In this third path, the labels would be produced at arcs f''-g'', g''-h'', h''-g', and g'-g. Several other paths are also possible.

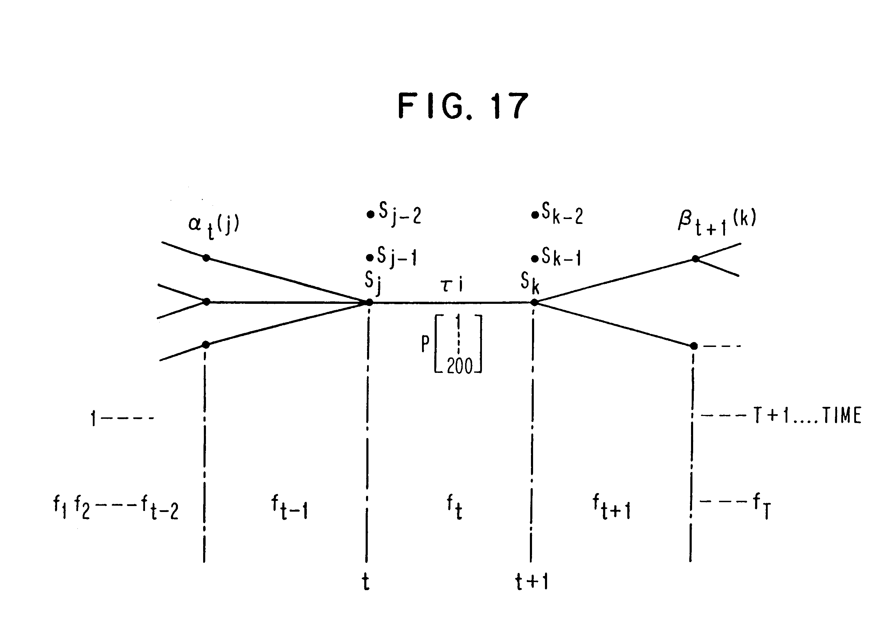

In employing the forward-backward algorithm, the probability of following an arc $\gamma_i$ between states $S_j$ and $S_k$ to produce a label $f_t$ at a time t is determined. As depicted in FIG. 17, this is done by computing three elements in a probability product.

First, based on the various optional paths in arriving at state $S_j$ from an initial state ($S_I$) while producing labels $f_1$ through $f_{t-1}$ a forward pass probability is determined for the probability $Pr'(S_j, \gamma_i, Y, t)$.

This component is denoted $\alpha_t(j)$. The second component of the product is the probability of taking transition $\gamma_i$ from state $S_j$ and producing label $f_t$. This may be expressed as:

$Pr(\gamma_i S_j)Pr(f_t | S_j, \gamma_i)$

This second component is based on the previously defined current value stored for a transition probability item (at transition $\gamma_i$) or for a label output probability item (for label $f_h$).

The third component of the product is denoted as $\beta_{t+1}(k)$. This third component represents the probability of producing labels $f_{t+1}$ through $f_T$ starting at state $S_k$ (at time $t+1$).

When $\gamma_i$ represents a null transition, the components become simplified because there is no requirement that a particular label be produced during the examined transition.

The $\alpha$ probability is also identified as $Pr(S,t)$. Successive $\alpha$'s are determined recursively starting at time 1 according to the expressions:

$$\alpha_1(1) = 1.0$$

$$\alpha_t(S) = \Sigma_{\sigma\tau m(S)}\alpha_{t-1}(\sigma)Pr(f_t, \sigma \rightarrow S) + \Sigma_{\sigma\tau n(S)}\alpha_t(\sigma)Pr(\sigma \rightarrow S) \text{ -- if } t>1\text{--}$$

where $n(S)$ represents the set of states having a null transition to state S and $m(S)$ represents the set of states having a non-null transition to state S. In accordance with the forward pass, for times 1, 2,...,T + 1 in sequence, the value of $\alpha_t(S)$ is computed for S = 1, 2,..., $S_F$ in sequence where $S_F$ is the final Markov model state. This is performed by solving the expression for $\alpha$ recursively. Calculation proceeds forward in time and forward through the states.

The backward pass involves determining the probability $\beta_t(S)$, the probability of completing the output string of labels starting from state S at time t. The $\beta$'s satisfy a similar computation as do the $\alpha$'s. The main difference is that the forward pass starts at state 1 and moves forward in time therefrom whereas the backward pass starts at the final state ($S_F$) and proceeds backward in time, and backwards through the states.

With N(S) representing the set of states which can be reached from S through a null transition, and M-(S) representing the set of states which can be reached from S through a non-null transitions, the following expressions apply:

$$\beta_{T+1}(S_F) = 1.0$$

$$\beta_t(S) = \Sigma_{\sigma\tau M(S)}Pr(f_t,S \rightarrow \sigma)\beta_{t+1}(\sigma) + \Sigma_{\sigma\tau N(S)}Pr(S \rightarrow \sigma)\beta_t(\sigma) \text{ --if } t\leq T.$$

In the backward pass, then, for times = T + 1, T,...,1 --in sequence-- values of $\beta_t(S)$ are computed for $S_F$, $S_{F-1}$, ..., 1 in sequence using the above recursive expressions.

With the three components determined for each given i, j, and t, the count values corresponding thereto are readily computed.

The labels and word base-forms which are defined interdependently are employed in a speech recognition system like that described in the patent application "Speech Recognition System" by Bahl et al., Serial Number, 845,155 filed March 27, 1986.

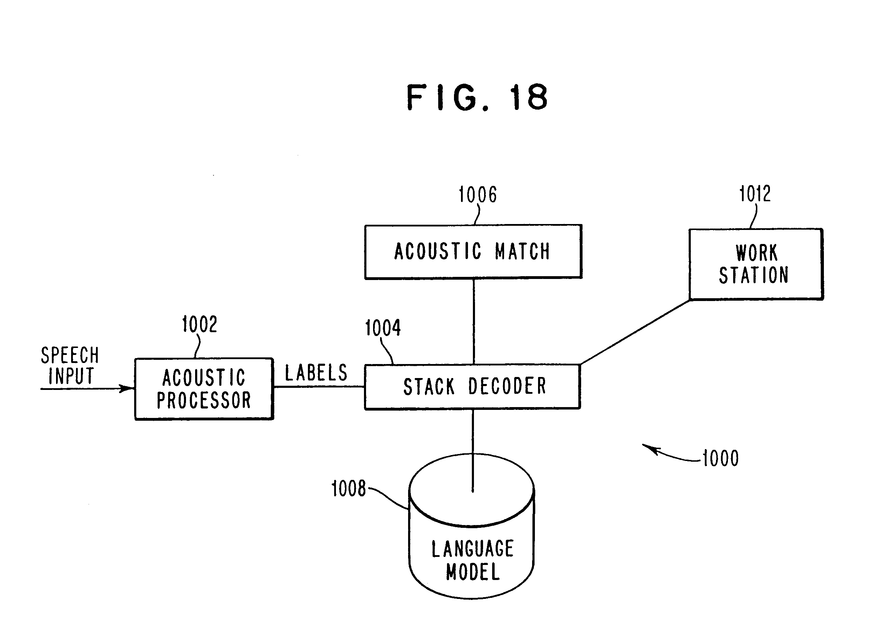

A general diagram of a Markov model speech recognition system 1000 is shown in FIG.18. FIG.18 includes an acoustic processor 1002. The acoustic processor 1002 operates like the acoustic processor 202 (of FIG.2). Accordingly, at successive intervals (e.g., centisecond intervals), successive labels from an alphabet of re-specified labels are selected as corresponding to the feature vectors detected at successive time intervals.

The labels enter a stack decoder 1004 to which is connected an acoustic match processor 1006, a language model processor 1008, and a work station 1010. The acoustic match processor 1006, in effect, performs a matching of the labels generated by the acoustic processor 1004 with word baseforms constructed interdependently with the re-specified labels (in step 302 of FIG. 3). Statistical data for the word baseforms is stored as shown in TABLE 1 for each. The acoustic match processor 1006 includes word baseforms --i.e., respective Markov model sequences for the vocabulary words-- with probability statistics stored for each arc and label output probability. (The probability statistics are determined during the training session.)

The sequence of Markov models for each word is derived from the baseform dictionary 208 (of FIG.2). That is, after the labels are re-specified for the last time and baseforms are constructed therefrom, the sequence of Markov models in the baseform is set for the speech recognizer of FIG.18. For each speaker, the same sequence of Markov models is applied. As in the case of phonetic Markov models in which the word "THE" is represented by the three Markov model sequence DH-UH1-XX for all speakers, the present invention provides the same sequence of fenemic Markov models for each given word regardless of speaker.

For each speaker, however, the probability statistics applied to the sequence of fenemic Markov models for a given word vary. Stated otherwise, for each speaker, an alphabet of labels having parameter values

EP 0 314 908 B1

characteristic of a subject speaker. Based on his alphabet of labels and based on the labels generated in response to the speaker uttering a sample text --which corresponds to a known sequence of fenemic Markov models-- the arc and label output probabilities of the Markov models are determined for the subject speaker.

Accordingly, the interdependent re-specifying of labels and construction of word baseforms is used in defining a universal sequence of fenemic Markov models for each word. Given the sequence for each word, each speaker utters the sample text to "train" --that is, compute and store probabilities for-- the fenemic Markov models. Training a Markov model speech recognizer is discussed in the co-pending patent application entitled "Improving the Training of Markov Models Used in a Speech Recognition System".

For a given string of labels, the acoustic match processor 1006 determines a likelihood score for words in the vocabulary --based on the computed and stored acoustical probability data for the fenemic Markov models.

The language model 1008 is based on word sequence data previously stored. Typically, millions of words are scanned and the number of times each sequence of m words (1≦m)occurs is tallied. In determining the language model score of a subject word as being the next word, the language model 1008 concatenates the subject word with two likely preceding words to form a subject tri-gram. Looking at the data base of word sequences and the number of times the subject tri-gram occurred in the data base text, a context likelihood is determined. If the word tri-gram did not occur in the data base, the subject word and the likely preceding word are considered as a bi-gram. The counts of the pair of words in the data base is then retrieved. If the pair did not occur in the data base, the likelihood of the subject word occurring alone in the data base is considered. A more detailed description of a language model processor 1008 is set forth in the European Patent Application 87 102 789.2, entitled "Apparatus and Method for Estimating, from Sparse Data, the Probability that a Particular One of a Set of Events is the Next Event in a String of Events". The language model processor 1008 is of major value in distinguishing between homonyms or phrases which can be represented similarly acoustically but are distinct contextually.

The stack decoder 1004 uses input from the acoustic processor 1006 and the language model 1008 in determining which sequences of words are sufficiently likely to warrant consideration as the sequence of words corresponding to a given speech input. Details of the acoustic decoder 1006 are set forth in a European Patent Application 86 104 218.2, entitled "Apparatus and Method for Determining a Likely Word Sequence from Labels Generated by an Acoustic Processor".

The interdependent labels and Markov model word baseforms result in improved performance of the speech recognition system of FIG.18.

A preferred mode of the speech recognizer of FIG.18 includes: (a) an IBM 4341 mainframe computer on which the stack decoding is performed; (b) three FPS 190L array processors for performing (i) detailed acoustic matching and approximate acoustic matching for producing a list of likely word candidates to which detailed matching is applied (see acoustic match 1006) and (ii) acoustic processing (see acoustic processor 1002) in which speech input is converted into labels, respectively; and a bank of IBM 3350 DASD units on which the statistics for the language model are stored.

The interdependent re-specifying of labels and construction of baseforms as described hereinabove is, in a specific embodiment, implemented on an IBM 3090 mainframe computer with memory storage sufficient to store the following items:

Feature vectors --- 10 kilobytes/word
Word Baseforms --- 1 kilobyte/word
Probabilities --- 200 kilobytes
Alignment data --- .4 kilobytes/word
Label (Prototype vector) data --- 200 kilobytes
Label IDs (fenemes) --- 200 bytes / word

## Claims

1. Apparatus for processing speech for speech recognition comprising:

an acoustic processor for generating one feature vector after another for one time interval after another in response to uttered speech;

means for assigning for each time interval one of an alphabet of stored labels thereto which corresponds to one prototype vector of an alphabet of prototype vectors said one prototype vector being the closest to the feature vector generated for a given time interval;

means for storing in a computer memory each word of a vocabulary stored in the computer memory as a word baseform consisting of a sequence of Markov models;

17

means for selecting a set of Markow models wherein each Markov model corresponds to a respective label;

means for storing a plurality of arc probabilities and label probabilities for each Markov model, wherein each label probability corresponds to the likelihood of a respective label being produced at a given Markov model arc;

characterized by

means for aligning labels for an uttered known word sequence, said labels being generated within the acoustic processor with each successive Markov model included in the known word sequence;

means for computing and storing mean and covariance values over all the feature vectors corresponding to the labels aligned with the subject Markov model;

means for respecifying the prototype vector of the label corresponding to the subject Markov model as the mean and covariance values computed for that subject Markov model;

and means for associating the respecified prototype vector with the label corresponding to the subject Markov model, thereby respecifying the labels.

2. Apparatus of Claim 1 further characterized by:

training means for computing Markov model data based on a string of labels generated by the acoustic processor in response to the utterance of a known text during the training session;

said training means being connected to enter the Markov model data into baseform constructor means for reconstructing the Markov model baseforms based on the respecified labels.

3. Apparatus of Claim 2, characterized in that said acoustic processor includes:

means for assigning to each successive time interval the label with associated mean and covariance values closest to the feature vector for said each interval;

the apparatus further comprising:

acoustic match means for (a) storing the constructed word baseforms and data computed therefor by said training means and (b) computing the measure of match between the string of labels generated by said acoustic processor and the sequence of Markov models constructed by said baseform constructor means for each word baseform.

4. Apparatus of Claim 3 further characterized by:

language model processor means for storing occurrence data of word sequences derived from sample database text and for computing a likelihood score of each word based on the stored occurrence data; and

stack decoder means, connected to receive as inputs (i) language model likelihood scores for words as computed by said language model processor means and (ii) acoustic match scores for words as computed by said acoustic match means, for selecting likely next words for each of a plurality of word paths based on the acoustic match scores and language model scores computed for the words;

said stack decoder means including means for computing, for each path of words previously decoded to have a likelihood above a prescribed threshold, the likelihood of said each path after selected words are appended thereto.

5. A computerized method of processing speech for speech recognition comprising the steps of:

(a) generating, in an accoustic processor, one feature vector after another for one time interval after another in response to uttered speech;

(b) for each time interval, assigning one of an alphabet of stored labels thereto which corresponds to one prototype vector of an alphabet of prototype vectors said one prototype vector being the closest to the feature vector generated for a given time interval;

(c) storing in computer memory each word of a vocabulary in a computer memory as a word baseform consisting of a sequence of Markov models, which includes the step of:

selecting a set of Markov models wherein each Markov model corresponds to a respective label; and storing, for each Markov model, a plurality of arc probabilities and label probabilities, wherein each label probability corresponds to the likelihood of a respective label being produced at a given Markov model arc;

the method being characterized by the further steps of:

(d) for an uttered known word sequence, aligning labels which are generated according to step (a) with each successive Markov model included in the known word sequence; and

(e) for a subject Markov model, computing and storing the mean and covariance values over all the feature vectors corresponding to the labels aligned with the subject Markov model; and

(f) re-specifying the prototype vector of the label corresponding to the subject Markov model as the mean and covariance values computed in step (e) for the subject Markov model; and

(g) associating the respecified prototype vector with the label corresponding to the subject Markov model, thereby respecifying the labels.

6. The method of Claim 5 comprising the further step of:
(h) repeating steps (e) to (g) for each Markov model as the subject Markov model.

7. The method of Claim 6 comprising the further steps of:
(j) re-constructing the word baseforms based on the re-specified labels.

8. The method of Claim 7 wherein step (j) includes the steps of:
(k) transforming each of multiple utterances of the word segment into a respective string of labels;
(ℓ) determining the best single Markov model P1 for producing the multiple label strings;
(m) determining the best two-model baseform of the form P1P2 or P2P1 for producing the multiple label strings;
(n) aligning the best two-model baseform against each label string;
(o) splitting each label string into a left portion and a right portion with the left portion corresponding to the first model of the two-model baseform and the right portion corresponding to the second model of the two-model baseform;
(p) identifying each left portion as a left substring and each right portion as a right substring;
(q) processing the set or left substrings in the same manner as the set of label strings corresponding to the multiple utterances including the further step of inhibiting further splitting of a substring when the single model baseform thereof has a higher probability of producing the substring than does the best two-model baseform;
(r) processing the set of right substrings in the same manner as the set of label strings corresponding to the multiple utterances, including the further step of inhibiting further splitting of a substring when the single model baseform thereof has a higher probability of producing the substring than does the best two-model baseform; and
(s) concatenating the unsplit single models in an order corresponding to the order of the label substrings to which they correspond.

9. The method of Claim 8 wherein step (j) includes the further steps of:
(t) aligning the concatenated baseform against each of the label strings and identifying, for each model in the concatenated baseform, the substring in each label string which corresponds thereto, the substrings corresponding to a given model being a set of common substrings;
(u) for each set of common substrings, determining the model having the highest joint probability of producing the common substrings; and
(v) for each common substring, replacing the model therefor in the concatenated baseform by the determined model of highest joint probability;
the baseform resulting from the replacing of models being a refined baseform.

10. The method of Claim 9 wherein step (j) further includes the step of:
(w) repeating steps (t) through (v) until no models are replaced.

**Patentansprüche**

1. Anordnung zur Verarbeitung von Sprache zur Spracherkennung, enthaltend:
einen Akustikprozessor zur aufeinanderfolgenden Erzeugung von Merkmalsvektoren in aufeinanderfolgenden Zeitintervallen als Folge einer Sprachäußerung;
Mittel zur Zuteilung für jedes Zeitintervall eines Kennzeichens aus einem Alphabet von Kennzeichen, welches einem Mustervektor aus einem Alphabet von Mustervektoren entspricht, wobei der genannte Mustervektor dem für ein gegebenes Zeitintervall erzeugten Merkmalsvektor am nächsten liegt;
Mittel zur Speicherung in einem Rechnerspeicher jedes Wortes eines im Rechnerspeicher gespeicherten Vokabulars als Wortgrundform, die aus einer Folge von Markov-Modellen besteht;
Mittel zur Auswahl eines Satzes von Markov-Modellen, in dem jedes Markov-Modell einem betreffenden Kennzeichen entspricht;

EP 0 314 908 B1

Mittel zur Speicherung einer Vielzahl von Bogen-Wahrscheinlichkeiten und Kennzeichen-Wahrscheinlichkeiten für jedes Markov-Modell, wobei jede Kennzeichen-Wahrscheinlichkeit der Wahrscheinlichkeit dafür entspricht, daß ein betreffendes Kennzeichen bei einem gegebenen Markov-Modell-Bogen erzeugt wird;

gekennzeichnet durch

Mittel zur Ausrichtung von Kennzeichen für eine geäußerte bekannte Wortfolge, wobei die genannten Kennzeichen im Akustikprozessor mit jedem in der bekannten Wortfolge enthaltenem, aufeinanderfolgenden Markov-Modell erzeugt werden;

Mittel zur Berechnung und Speicherung von Mittel- und Kovarianz-Werten über alle Merkmals-Vektoren, die den mit dem vorliegenden Markov-Modell ausgerichteten Kennzeichen entsprechen;

Mittel zur Wiederangabe des Mustervektors des Kennzeichens, das dem vorliegenden Markov-Modell entspricht, als die für dieses Markov-Modell berechneten Mittel- und Kovarianz-Werte;

und Mittel zum Verbinden des wiederangegebenen Mustervektors mit dem Kennzeichen, das dem vorliegenden Markov-Modell entspricht, wodurch das Kennzeichen respezifiziert wird.

2.  Anordnung nach Anspruch 1, ferner gekennzeichnet durch:

Trainiermittel zur Berechnung der Markov-Modell Daten aufgrund einer Kennzeichenfolge, die vom Akustikprozessor als Folge der Äußerung des bekannten Textes während der Trainingsperiode erzeugt wurde;

wobei die genannten Trainiermittel mit der Anordnung zur Eingabe der Markov-Modell Daten in Grundform-Konstruktionsmittel zur Rekonstruktion der auf den respezifizierten Kennzeichen basierenden Markov-Modell Grundformen verbunden sind.

3.  Anordnung nach Anspruch 2, dadurch gekennzeichnet, daß der genannte Akustikprozessor enthält:

Mittel zur Zuteilung zu jedem aufeinanderfolgenden Zeitintervall des Kennzeichens mit den dazugehörigen Mittel- und Kovarianz-Werten, die dem Merkmalsvektor für das genannte jede Zeitintervall am nächsten liegen;

wobei die Anordnung ferner Übereinstimmungsmittel aufweist, zum (a) Speichern der konstruierten Wortgrundformen und der dazu von den genannten Trainingsmittel berechneten Daten, und (b) zum Berechnen des Ausmaßes der Übereinstimmung zwischen der vom genannten Akustikprozessor erzeugten Kennzeichenfolge, und den von den genannten Grundform-Konstruktionsmittel für jede Wort-Grundform konstruierten Markov-Modell-Folgen.

4.  Anordnung nach Anspruch 3, weiters gekennzeichnet durch:

Sprachmodell-Prozessormittel zur Speicherung von Daten über das Vorkommen von Wortfolgen, die vom Muster- Datenbasistext abgeleitet sind, und zur Berechnung eines Wahrscheinlichkeitsergebnisses für jedes Wort, basierend auf den gespeicherten Vorkommensdaten; und

Stapeldecodiermittel, welche derart verbunden sind, daß sie als Eingang (i) Sprachmodell-Wahrscheinlichkeitsergebnisse wie von den genannten-Sprachprozessormittel berechnet, und (ii) Akustik-Übereinstimmungsergebnisse für Wörter wie von den genannten Akustik-Übereinstimmungsmittel berechnet, erhalten, zur Auswahl von wahrscheinlichen nächsten Wörtern für jeden einer Vielzahl von Wortpfaden, basierend auf den Akustik-Übereinstimmungsergebnissen und Sprachmodell-Ergebnissen, wie sie für die Wörter berechnet wurden;

wobei die genannten Stapeldecodiermittel Mittel enthalten zur Berechnung für jeden vorher mit einer Wahrscheinlichkeit über einem vorgeschriebenen Schwellenwert decodierten Wortpfad, der Wahrscheinlichkeit für jeden Pfad nach der Hinzufügung ausgewählter Wörter.

5.  Rechnerverfahren zur Verarbeitung von Sprache zur Spracherkennung, enthaltend die folgenden Schritte:

(a) aufeinanderfolgende Erzeugung in einem Akustikprozessor von Merkmalsvektoren für aufeinanderfolgende Zeitintervalle als Folge einer Sprachäußerung;

(b) für jedes Zeitintervall Zuteilung eines Kennzeichens aus einem Alphabet von gespeicherten Kennzeichen, welches einem Mustervektor aus einem Alphabet von Mustervektoren entspricht, wobei der genannte Mustervektor dem für ein gegebenes Zeitintervall erzeugten Merkmalsvektor am nächsten liegt;

(c) Speicherung im Rechnerspeicher eines jeden Wortes eines Vokabulars in einem Rechnerspeicher als eine Wortgrundform, die aus Markov-Modellen besteht, mit Einschluß der folgenden Schritte:

20

Auswahl eines Satzes von Markov-Modellen, worin jedes Markov-Modell einem betreffenden Kennzeichen entspricht; und

Speicherung für jedes Markov-Modell einer Vielzahl von Bogen- und Kennzeichen-Wahrscheinlichkeiten, worin jede Kennzeichenwahrscheinlichkeit der Wahrscheinlichkeit dafür entspricht, daß ein betreffendes Kennzeichen bei einem gegebenen Markov-Modell Bogen erzeugt wird;

Verfahren gekennzeichnet durch die folgenden weiteren Schritte:

(d) für eine geäußerte bekannte Wortfolge, Ausrichtung der Kennzeichen, die gemäß Schritt (a) erzeugt wurden mit jedem aufeinanderfolgenden, in der bekannten Wortfolge enthaltenen Markov-Modell;

(e) für das vorliegende Markov-Modell, Berechnung und Speicherung der Mittel- und Kovarianz-Werte über alle Merkmalsvektoren, die den mit dem vorliegenden Markov-Modell ausgerichteten Merkmalsvektoren entsprechen;

(f) Respezifizierung des Mustervektors des Kennzeichens, das dem vorliegenden Markov-Modell entspricht, mit den Mittel- und Kovarianz-Werten, wie sie in Schritt (e) für das vorliegende Markov-Modell berechnet wurden; und

(g) Verbindung des wiederangegebenen Mustervektors mit dem Kennzeichen das dem vorliegenden Markov-Modell entspricht, wodurch die Kennzeichen respezifiziert werden.

6. Verfahren nach Anspruch 5, mit dem weiteren Schritt:

(h) Wiederholung der Schritte (e) bis (g) für jedes Markov-Modell als das vorliegende Markov-Modell.

7. Verfahren nach Anspruch 6, mit dem weiteren Schritt:

(j) Rekonstruktion der Wortgrundformen basierend auf den respezifizierten Kennzeichen.

8. Verfahren nach Anspruch 7, worin der Schritt (j) die folgenden Schritte einschließt:

(k) Transformation von jeder von mehrfachen Äußerungen des Wortsegmentes in eine betreffende Kennzeichenfolge;

(l) Bestimmung des besten einzelnen Markov-Modells P1 zur Erzeugung der mehrfachen Kennzeichenfolgen;

(m) Bestimmung der besten Zwei-Modell Grundform der Form P1P2 oder P2P1 zur Erzeugung der mehrfachen Kennzeichenfolgen;

(n) Ausrichtung der besten Zwei-Modell Grundform gegen jede Kennzeichenfolge;

(o) Teilung jeder Kennzeichenfolge in einen linken Teil und einen rechten Teil, wobei der linke Teil dem ersten Modell der Zwei-Modell Grundform und der rechte Teil dem zweiten Teil der Zwei-Modell Grundform entspricht;

(p) Identifizierung jedes linken Teiles als linke Unterfolge und jedes rechten Teiles als rechte Unterfolge;

(q) Verarbeitung des Satzes von linken Unterfolgen auf die selbe Weise wie des Satzes von Kennzeichenfolgen, die den mehrfachen Äußerungen entspricht, mit Einschluß des weiteren Schrittes der Verhinderung der weiteren Aufteilung einer Unterfolge, wenn deren einzelne Modell-Grundform eine höhere Wahrscheinlichkeit zur Erzeugung der Unterfolge hat als die beste Zwei-Modell Grundform;

(r) Verarbeitung des Satzes von rechten Unterfolgen auf die selbe Weise wie des Satzes von Kennzeichenfolgen, die den mehrfachen Äußerungen entsprechen, mit Einschluß des weiteren Schrittes der Verhinderung der weiteren Teilung einer Unterfolge, wenn deren einzelne Modell-Grundform eine höhere Wahrscheinlichkeit zur Erzeugung der Unterfolge hat als die beste Zwei-Modell Grundform; und

(s) Aneinanderfügen der ungeteilten einzelnen Modelle in der Reihenfolge, die der Reihenfolge der ihnen entsprechenden Unterfolgen entspricht.

9. Verfahren nach Anspruch 8, worin der Schritt (j) die folgenden Schritte einschließt:

(t) Ausrichtung der aneinandergefügten Grundform gegen jede der Kennzeichenfolgen und Identifizierung, für jedes Modell in der aneinandergefügten Grundform, der Unterfolge in jeder Kennzeichenfolge, die ihm entspricht, wobei die Unterfolgen, die einem gegebenen Modell entsprechen, einen Satz von gemeinsamen Unterfolgen darstellen; und

(v) für jede gemeinsame Unterfolge, Ersatz des Modells dafür in der aneinandergefügten Grundform durch das bestimmte Modell mit der höchsten vereinten Wahrscheinlichkeit; wobei die Grundform, die aus dem Ersatz von Modellen resultiert, eine verbesserte Grundform ist.

**10.** Verfahren nach Anspruch 9, worin der Schritt (j) den folgenden Schritt einschließt:
(w) Wiederholung der Schritte (t) bis (v) bis keine Modelle mehr ersetzt werden.

**Revendications**

**1.** Appareil de traitement de la parole pour la reconnaissance de la parole, comprenant :

un processeur acoustique engendrant un vecteur d'entité après un autre, pour un intervalle de temps après un autre, en réponse à une émission de parole ;

des moyens d'affectation, pour chaque intervalle de temps, d'une étiquette d'un alphabet d'étiquettes mémorisées, qui correspond à un vecteur prototype d'un alphabet de vecteurs prototypes, ledit vecteur prototype étant le plus proche du vecteur d'entité engendré pour un intervalle de temps considéré ;

des moyens de mémorisation, dans une mémoire d'ordinateur, de chaque mot d'un vocabulaire stocké dans la mémoire d'ordinateur comme une forme de base de mot consistant en une séquence de modèles de Markov ;

des moyens de sélection d'un ensemble de modèles de Markov dans lequel chaque modèle de Markov correspond à une étiquette respective ;

des moyens de mémorisation d'une pluralité de probabilités d'arc et de probabilités d'étiquette pour chaque modèle de Markov, chaque probabilité d'étiquette correspondant à la probabilité de production d'une étiquette respective à un arc de modèle de Markov donné ;
caractérisé par

des moyens d'alignement des étiquettes pour une séquence de mots connus émis, lesdites étiquettes étant engendrées dans le processeur acoustique avec chaque modèle de Markov successif inclus dans la séquence de mots connus ;

des moyens de calcul et de stockage des valeurs moyennes et de covariance pour tous les vecteurs d'entité correspondant aux étiquettes alignées avec le modèle de Markov considéré ;

des moyens de respécification du vecteur prototype de l'étiquette correspondant au modèle de Markov considéré, comme étant les valeurs moyennes et de covariance calculées pour ce modèle de Markov considéré; et

des moyens d'association du vecteur prototype respécifié avec l'étiquette correspondant au modèle de Markov considéré, ce qui respécifie les étiquettes.

**2.** Appareil suivant la revendication 1, caractérisé en outre par :

des moyens d'apprentissage pour calculer les données de modèle de Markov sur la base d'une chaîne d'étiquettes engendrées par le processeur acoustique en réponse à l'émission d'un texte connu, pendant la session d'apprentissage ;

lesdits moyens d'apprentissage étant connectés de manière à entrer les données de modèle de Markov dans des moyens de construction de forme de base, pour reconstruire les formes de base de modèle de Markov sur la base des étiquettes respécifiées.

**3.** Appareil suivant la revendication 2, caractérisé en ce que ledit processeur acoustique comprend :

des moyens d'affectation, à chaque intervalle de temps successif, de l'étiquette ayant des valeurs moyennes et de covariance associées les plus proches du vecteur d'entité pour chaque dit intervalle ;
l'appareil comprenant en outre :

des moyens de comparaison acoustique pour (a) stocker les formes de base de mot construites et les données calculées pour cela par lesdits moyens d'apprentissage et (b) calculer la mesure de concordance entre la chaîne d'étiquettes engendrées par ledit processeur acoustique et la séquence de modèles de Markov construits par lesdits moyens de construction de forme de base,pour chaque forme de base de mot.

**4.** Appareil suivant la revendication 3, caractérisé en outre par :

des moyens de traitement de modèle de langage pour stocker des données d'occurrence de séquences de mots, obtenues à partir d'un échantillon de texte de base de données, et pour calculer une note de probabilité de chaque mot sur la base des données d'occurrence stockées ; et

des moyens de décodage de pile, connectés pour recevoir comme entrées (i) les notes de probabilité de modèle de langage pour les mots, calculées par lesdits moyens de traitement de modèle de langage, et (ii) les notes de concordance acoustique pour les mots, calculées par lesdits moyens de comparaison acoustique, afin de choisir les mots probablement suivants pour chacun d'une pluralité de

22

chemins de mots sur la base des notes de concordance acoustique et des notes de modèle de langage calculées pour les mots ;

lesdits moyens de décodage de pile comprenant des moyens de calcul, pour chaque chemin de mots précédemment décodé comme ayant une probabilité supérieure à un seuil prescrit, de la probabilité de chaque dit chemin après adjonctions de mots choisis à celui-ci.

5. Méthode informatisée de traitement de la parole pour la reconnaissance de la parole, comprenant les étapes de :

(a) génération, dans un processeur acoustique, d'un vecteur d'entité après un autre, pour un intervalle de temps après un autre, en réponse à une émission de parole ;

(b) pour chaque intervalle de temps, affectation à celui-ci d'une étiquette d'un alphabet d'étiquettes mémorisées qui correspond à un vecteur prototype d'un alphabet de vecteurs prototypes, ledit vecteur prototype étant le plus proche du vecteur d'entité engendré pour un intervalle de temps considéré ;

(c) stockage, dans une mémoire d'ordinateur, de chaque mot d'un vocabulaire dans une mémoire d'ordinateur, comme une forme de base de mot consistant en une séquence de modèles de Markov, qui comprend l'étape de

sélection d'un ensemble de modèles de Markov dans lequel chaque modèle de Markov correspond à une étiquette respective ; et

mémorisation, pour chaque modèle de Markov, d'une pluralité de probabilités d'arc et de probabilités d'étiquette, chaque probabilité d'étiquette correspondant à la probabilité qu'une étiquette respective soit produite à un arc de modèle de Markov considéré;

la méthode étant caractérisée par les étapes supplémentaires de :

(d) pour une séquence de mots connus émis, alignement des étiquettes qui sont engendrées conformément à l'étape (a) avec chaque modèle de Markov successif inclus dans la séquence de mots connus ;

(e) pour un modèle de Markov considéré, calcul et stockage des valeurs moyennes et de covariance pour tous les vecteurs d'entité correspondant aux étiquettes alignées avec le modèle de Markov considéré ;

(f) respécification du vecteur prototype de l'étiquette correspondant au modèle de Markov considéré, comme les valeurs moyennes et de covariance calculées à l'étape (e) pour le modèle de Markov considéré ; et

(g) association du vecteur prototype respécifié avec l'étiquette correspondant au modèle de Markov considéré, de façon à respécifier les étiquettes.

6. Méthode suivant la revendication 5, comprenant l'étape supplémentaire de :

(h) répétition des étapes (e) à (g) pour chaque modèle de Markov pris comme modèle de Markov considéré.

7. Méthode suivant la revendication 6, comprenant l'étape supplémentaire de :

(j) reconstruction des formes de base de mot, sur la base des étiquettes respécifiées.

8. Méthode suivant la revendication 7, dans laquelle l'étape (j) comprend les étapes de :

(k) transformation de chacune de multiples émissions du segment de mot en une chaîne respective d'étiquettes ;

(l) détermination du meilleur modèle de Markov unique P1 pour produire les chaînes d'étiquettes multiples ;

(m) détermination de la meilleure forme de base de deux modèles, de la forme P1P2 ou P2P1, pour produire les chaînes d'étiquettes multiples ;

(n) alignement de la meilleure forme de base de deux modèles par rapport à chaque chaîne d'étiquettes;

(o) division de chaque chaîne d'étiquettes en une partie de gauche et une partie de droite, la partie de gauche correspondant au premier modèle de la forme de base de deux modèles et la partie de droite correspondant au deuxième modèle de la forme de base de deux modèles ;

(p) identification de chaque partie de gauche comme une sous-chaîne de gauche et de chaque partie de droite comme une sous-chaîne de droite ;

(q) traitement de l'ensemble de sous-chaînes de gauche de la même manière que l'ensemble de chaînes d'étiquettes correspondant aux multiples émissions, comportant l'étape supplémentaire

23

d'interdiction d'une nouvelle division d'une sous-chaîne lorsque sa forme de base de modèle unique possède une probabilité de production de la sous-chaîne plus élevée que celle de la meilleure forme de base de deux modèles ;

(r) traitement de l'ensemble de sous-chaînes de droite de la même manière que l'ensemble de chaînes d'étiquettes correspondant aux multiples émissions, comportant l'étape supplémentaire d'interdiction d'une nouvelle division d'une sous-chaîne lorsque sa forme de base de modèle unique possède une probabilité de production de la sous-chaîne plus élevée que celle de la meilleure forme de base de deux modèles ; et

(s) concaténation des modèles uniques non divisés, dans un ordre correspondant à l'ordre des sous-chaînes d'étiquettes auxquelles ils correspondent.

9.  Méthode suivant la revendication 8, dans laquelle l'étape (j) comprend les étapes supplémentaires de :
    (t) alignement de la forme de base en concaténation par rapport à chacune des chaînes d'étiquettes et identification,pour chaque modèle de la forme de base en concaténation, de la sous-chaîne de chaque chaîne d'étiquettes qui lui correspond, les sous-chaînes correspondant à un modèle donné étant un ensemble de sous-chaînes communes ;
    (u) pour chaque ensemble de sous-chaînes communes, détermination du modèle ayant la plus grande probabilité jointe de produire les sous-chaînes communes ; et
    (v) pour chaque sous-chaîne commune, remplacement du modèle correspondant dans la forme de base en concaténation par le modèle déterminé de plus grande probabilité jointe ;
        la forme de base résultant du remplacement des modèles étant une forme de base affinée.

10. Méthode suivant la revendication 9, dans laquelle l'étape (j) comprend en outre l'étape de :
    (w) répétition des étapes (t) à (v) jusqu'à ce qu'aucun modèle ne soit remplacé.

# FIG. 1

# FIG. 2

# FIG. 3

```
GROW  WORD  BASEFORMS ──────302
        │
        ▼
OBTAIN  VITERBI  ALIGNMENT ──────304
        │
        ▼
CALCULATE  MEANS, COVARIANCES ──────306
        │
        ▼
RELABEL  SPEECH  INPUT  DATA ──────308
```

# FIG. 4

$$P[tr1]$$

$$P_1\begin{bmatrix} L1 \\ \vdots \\ L200 \end{bmatrix}$$

400

$$[tr2]$$

S1    S2

$$P_2\begin{bmatrix} L1 \\ \vdots \\ L200 \end{bmatrix}$$

$$P[tr3]$$

# FIG. 5

BASEFORM
DATA

FEATURE
VECTORS

210

502

504

506

```
VITERBI
ALIGNMENT
PROCESSOR
```

```
MEAN AND
COVARIANCE
ESTIMATOR
```

```
LABEL
SPECIFIER
```

LABELS
$f_1 f_2 f_3$

RE-SPECIFIED
LABELS

# FIG. 6

READ LABEL $f_k^{in}$, $\ell_{in} \geq k \geq 1$ ——602

READ MODELS $P_j^i$, $d_i \geq j \geq 1$ ——604

DETERMINE LABEL MAP $v_k^{in}$ BY
MEANS OF VITERBI ALIGNMENT ——606

STORE $v_k^{in}$ ——608

# FIG. 7

WORD 1 BASEFORM

LABELS FOR
WORD 1 / UTTERANCE 1

FM7    FM8    FM10    FM20

L10  L7    L7    L8    L8    L20  L21    INTERVALS
OF SPEECH

LABELS FOR
WORD 1 / UTTERANCE 2

FM7    FM8    FM10    FM20

L7    L8    L10    L20    INTERVALS
OF SPEECH

LABELS FOR
WORD i / UTTERANCE n

FM100  FM8    FM10    FM5    FM5

L108    L20    L5    L5    INTERVALS
OF SPEECH

# FIG. 8

START

INITIALIZE MEANS AND COVARIANCES —800

WORD ← 1 —802

READ P$^{\text{WORD}}$ —804

nutt ← 1 —806

k ← 1 —808

READ Y$_k^{\text{WORD,nutt}}$ V$_k^{\text{WORD,nutt}}$ —810

ACCUMULATE MEANS AND COVARIANCES —812

k ← k+1 —814

NO — k > $\ell^{\text{in}}$ —816

↓YES

nutt ← nutt+1 —818

NO — nutt > nutts$_{\text{WORD}}$ —820

↓YES

WORD ← WORD+1 —822

NO — WORD > nWORDS —824

↓YES

ESTIMATE MEANS AND COVARIANCES —826

STOP

29

# FIG. 9

START

↓

$i \leftarrow 1$

↓

$M(i) \leftarrow \emptyset, \; C(i) \leftarrow \emptyset, \; COUNT_i \leftarrow \emptyset$

↓

$i \leftarrow i + 1$

↓

$i > NPHONES$ — NO (loop back)

↓ YES

STOP

# FIG. 10

START

↓

$j \leftarrow V_k^{WORD,NUTT}$

↓

$M(P_j^{WORD}) \leftarrow M(P_j^{WORD}) + Y_k^{WORD,NUTT}$

$C(P_j^{WORD}) \leftarrow C(P_j^{WORD}) + Y_k^{WORD,NUTT}(Y_k^{WORD,NUTT})^T$

↓

$COUNT \; P_j^{WORD} \leftarrow COUNT \; P_j^{WORD} + 1$

↓

STOP

# F I G. 11

```
          ┌─────────────┐
          │    START    │
          └─────────────┘
                 │
                 ▼
          ┌─────────────┐
          │   i ← 1     │
          └─────────────┘
                 │
                 ▼
   ┌──────────────────────────────────────┐
   │        M(i) ← M(i)/COUNTᵢ            │
   │                                      │
   │  C(i)=C(i)/COUNTᵢ + M(i)M(i)ᵀ        │
   └──────────────────────────────────────┘
                 │
                 ▼
          ┌─────────────┐
          │  i ← i + 1  │
          └─────────────┘
                 │
                 ▼
      ┌─────────────────────┐
      │   i > NPHONES       │
      └─────────────────────┘
                 │
                 ▼
          ┌─────────────┐
          │    STOP     │
          └─────────────┘
```

$M(i) \leftarrow M(i)/COUNT_i$

$C(i) = C(i)/COUNT_i + M(i)M(i)^T$

$i > NPHONES$

# F I G. 12

```
            ┌─────────┐
            │  START  │
            └─────────┘
                 │
                 ▼
        ┌──────────────────┐
        │   WORD ← 1       │────850
        └──────────────────┘
                 │
                 ▼
        ┌──────────────────┐
   ┌───▶│   NUTT ← 1       │────851
   │    └──────────────────┘
   │             │
   │             ▼
   │  ┌────────────────────────────┐
   │  │ READ Y WORD,NUTT, k ← 1    │────852
   │  └────────────────────────────┘
   │             │
   │             ▼
   │  ┌────────────────────────────┐
   │  │ FIND CLOSEST MARKOV MODEL  │────854
   │  │     TO Y$_k^{WORD,NUTT}$   │
   │  └────────────────────────────┘
   │             │
   │             ▼
   │     ┌──────────────────┐
   │     │    k ← k + 1     │────856
   │     └──────────────────┘
   │             │
   │  NO         ▼
   │◀────┌──────────────────┐
   │     │   k > ℓ$^{in}$   │────858
   │     └──────────────────┘
   │             │ YES
   │             ▼
   │     ┌──────────────────┐
   │     │ NUTT ← NUTT + 1  │────860
   │     └──────────────────┘
   │             │
   │  NO         ▼
   │◀────┌──────────────────────┐
   │     │ NUTT > NUTT$_{WORD}$ │────862
   │     └──────────────────────┘
   │             │ YES
   │             ▼
   │     ┌──────────────────┐
   │     │  WORD ← WORD + 1 │────864
   │     └──────────────────┘
   │             │
   │  NO         ▼
   └─────┌──────────────────┐
         │  WORD > N WORDS  │────866
         └──────────────────┘
                 │ YES
                 ▼
            ┌─────────┐
            │  STOP   │
            └─────────┘
```

# FIG. 13

```
                    ┌──────────┐
                    │  START   │
                    └────┬─────┘
                         │
         ┌───────────────▼──────────────────┐
         │  j ← 1, d_MIN ← ∞, j_MIN ← ∞      │
         └───────────────┬──────────────────┘
                         │
    ┌────────────────────▼──────────────────────────────┐
    │ d ← log(detC(j)) + [(Y_k^WORD,NUTT_M(j))^T] C(j)^-1 │
    │              (Y_k^WORD,NUTT_M(j))                   │
    └────────────────────┬──────────────────────────────┘
                         │
       NO  ┌─────────────▼─────────────┐
      ◄────┤        d < d_MIN          │
           └─────────────┬─────────────┘
                        YES
            ┌────────────▼─────────────┐
            │     d_MIN ← d            │
            │     j_MIN ← j            │
            └────────────┬─────────────┘
                         │
            ┌────────────▼─────────────┐
            │        j ← j + 1         │
            └────────────┬─────────────┘
                         │
       NO  ┌─────────────▼─────────────┐
      ◄────┤       j > NPHONES         │
           └─────────────┬─────────────┘
                        YES
                    ┌────▼─────┐
                    │   STOP   │
                    └──────────┘
```

$d \leftarrow \log(\det C(j)) + \left[ (Y_k^{WORD,NUTT}\_M(j))^T \right] C(j)^{-1} (Y_k^{WORD,NUTT}\_M(j))$

FIG. 14A

FIG. 14

| FIG.14A | FIG.14B |

TRANSFORM UTTERANCES OF WORD INTO FENEME STRINGS

DETERMINE BEST SINGLE PHONE BASEFORM FOR $P_1$ MULTIPLE UTTERANCES

DETERMINE BEST PHONE BASEFORM $P_1$ $P_2$ OR $P_2$ $P_1$ FOR MULTIPLE UTTERANCES

ALIGN BEST $P_1$ $P_2$ OR $P_2$ $P_1$ TO EACH FENEME STRING

SPLIT EACH FENEME STRING INTO LEFT PORTION AND RIGHT PORTION WHERE $P_1$ AND $P_2$ MEET

SPLIT EACH RIGHT SUBSTRING INTO LEFT PORTION AND RIGHT PORTION

NO

IS $P_R$ BETTER THAN BEST $P_R$ $P_B$ OR $P_B$ $P_R$ ?

YES

IDENTIFY EACH LEFT PORTION AS A LEFT SUBSTRING AND EACH RIGHT PORTION AS A RIGHT SUBSTRING

FIND BEST SINGLE PHONE BASEFORM $P_R$ FOR RIGHT SUBSTRINGS

FIND BEST TWO PHONE BASEFORM OF FORM $P_R$ $P_B$ OR $P_B$ $P_R$

FIND BEST SINGLE PHONE BASEFORM $P_L$ FOR LEFT SUBSTRINGS

FIND BEST TWO PHONE BASEFORM OF FORM $P_L$ $P_A$ OR $P_A$ $P_L$

IS $P_L$ BETTER THAN BEST $P_L$ $P_A$ OR $P_A$ $P_L$

YES

NO

SPLIT EACH LEFT SUBSTRING INTO LEFT PORTION AND RIGHT PORTION

ALIGN TWO PHONE BASEFORMS

EP 0 314 908 B1

# FIG. 14B

EP 0 314 908 B1

# FIG. 15

# FIG. 16

# FIG. 17

EP 0 314 908 B1

# FIG. 18

SPEECH INPUT → ACOUSTIC PROCESSOR (1002) → LABELS → STACK DECODER (1004)

ACOUSTIC MATCH (1006)

WORK STATION (1012)

LANGUAGE MODEL (1008)

1000

EP 0 314 908 B1